# EUROPÄISCHE PATENTSCHRIFT

(11) **EP 1 791 882 B1**
(45) Veröffentlichungstag und Bekanntmachung des Hinweises auf die Patenterteilung: **21.07.2010**
(21) Anmeldenummer: 05794318.5
(22) Anmeldetag: 22.09.2005
(51) Int. Cl.: C08G 18/38, C08G 18/50, C08G 18/62

(54) **FLUORMODIFIZIERTE REAKTIVHARZSYSTEME, VERFAHREN ZUR IHRER HERSTELLUNG UND DEREN VERWENDUNG**
FLUORINE-MODIFIED REACTIVE RESIN SYSTEMS, METHOD FOR PRODUCING THEM AND THEIR USE
SYSTEMES DE RESINE REACTIVE MODIFIES AU FLUOR, PROCEDES DE REALISATION ET UTILISATION ASSOCIES

(30) Priorität: 24.09.2004 DE 102004046568
(43) Veröffentlichungstag der Anmeldung: 06.06.2007
(73) Patentinhaber: Construction Research and Technology GmbH, 83308 Trostberg (DE)
(72) Erfinder: MAIER, Alois, 84549 Engelsberg (DE); STEIDL, Norbert, 83361 Kienberg (DE); SCHROERS, Michael, 83342 Tacherting (DE); WEINELT, Frank, 48727 Billerbeck (DE); WOLFERTSTETTER, Franz, 83349 Palling (DE)
(74) Vertreter: Dey, Michael
(86) Internationale Anmeldenummer: PCT/EP2005/010286
(87) Internationale Veröffentlichungsnummer: WO 2006/032511

(56) Entgegenhaltungen:
- EP-A- 0 339 862
- WO-A-03/072667
- WO-A-2005/007722
- WO-A-2005/007762
- US-A- 6 069 191

## Beschreibung

Die vorliegende Erfindung betrifft fluormodifizierte Reaktivharzsysteme mit verbesserten Oberflächeneigenschaften, Verfahren zu ihrer Herstellung sowie deren Verwendung.

Fluormodifizierte Polymerzusammensetzungen gewinnen aufgrund ihrer einzigartigen Oberflächeneigenschaften, beispielsweise Wasser- bzw. Ölabweisung, immer mehr an Bedeutung und sind somit prädestiniert für die Verwendung als schmutzabweisende Beschichtungssysteme im Bau-, Nichtbau- und Industriebereich. Dies zeigt sich nicht zuletzt an der Fülle der zu diesem Thema in jüngerer Zeit veröffentlichten Literatur (R. Winter, P. G. Nixon, R. J. Terjeson, J. Nohtasham, N. R. Holcomb, D. W. Grainger, D. Graham, D. G. Castner, G. L. Gard, J. Fluorine Chem., 2002, 115(2), 107-113; R. D. van de Grampel, W. Ming, J. Laven, R. van der Linde, F. A. M. Leermakers, Macromol., 2002, 35(14), 5670-5680; V. Castelvetro, M. Aglietto, F. Ciardelli, O. Chiantore, M. Lazzari, L. Toniolo, J. Coat. Technol., 2002, 74, 57-66).

High-Performance Beschichtungsmaterialien auf Polyurethanbasis bestehend aus einem Polyisocyanat und einer isocyanatreaktiven Komponente, wie z.B. einem höhermolekularen Polyol, sind allgemein bekannt. Sie zeigen zwar sehr gute Materialeigenschaften, besitzen jedoch hohe Oberflächenenergien und sind deshalb nicht leicht zu reinigen.

Die zunehmende Nachfrage nach schmutz- und wasserabweisenden Coatings führte zur Entwicklung von fluorhaltigen Zusammensetzungen, die entweder den Beschichtungssystemen zugemischt werden (wie in WO 99/26994 beschrieben) oder reversibel auf Beschichtungssysteme aufgetragen werden (vgl. DE 100 63 431 Cl). Fluorierte Polyurethansysteme und ihre Verwendung zur Modifizierung der Oberflächeneigenschaften von Beschichtungen, wie Oleo- bzw. Hydrophobierung, sind aus der Patentliteratur bereits seit längerem bekannt.

In der EP 0 405 534 A1 werden hydroxyfunktionelle (Per)fluoropolyether enthaltende Polyurethane zur Behandlung von Steinoberflächen beschrieben, die jedoch keine echten Filme ausbilden.

Hydrophile Polyurethanfilme, beschichtet mit fluormodifizierten Polymeren auf Basis von Perfluoralkylacrylaten oder -methacrylaten, mit hohen Dampfdurchlässigkeitsraten zur Oleo- und Hydrophobierung sind aus der WO 97/36951 A1 bekannt.

US 4,504,401 B1 offenbart niedermolekulare Perfluoralkylgruppen enthaltende Urethane zur schmutzabeweisenden Ausrüstung von Faserprodukten wie z. B. Teppichen.

In der EP 0 702 041 A1 werden mit fluorierten Monoalkoholen modifizierte Allophanat- und Isocyanurat-Gruppen enthaltende Polyisocyanate beschrieben, die in Zusammensetzungen für 1K oder 2K- Beschichtungssysteme Oberflächenenergien zwischen 19,4 und 43,7 Dynes/cm aufweisen.

Gemäß EP 0 719 809 A1 werden ähnliche fluormodifizierte Polyisocyanate sowie Blends mit anderen nicht-fluorierten Polyisocyanaten offenbart, wobei hier das Fluor über Fluorkomponenten mit einer oder mehr Hydroxylgruppen eingeführt wird. Die Verwendung in Beschichtungszusammensetzungen führt zu Filmen mit ähnlichen Oberflächenenergien wie in EP 0 702 041 A1 beschrieben.

Fluormodifizierte Urethan-Systeme bestehend aus einem fluorhaltigen Polyol mit einer oder mehreren Hydroxylgruppen und Polyisocyanaten mit Allophanat- und Isocyanurat-Strukturen im Molekulargewichtsverhältnis von 4:1 bis 1:10 sind aus der EP 0 566 037 A2 bekannt. Diese Systeme führen, als Härterkomponente eingesetzt, zu klaren Filmen.

Gemäß DE 195 47 448 A1 werden abriebfeste Urethanbeschichtungszusammensetzungen mit verminderter Reibung auf Basis von fluorierten Alkoholen, nichtfluorierten Polyolen und blockierten Polyisocyanaten sowie mindestens einem Aminvernetzer offenbart. Aufgrund der blockierten Polyisocyanate muss die Beschichtungszusammensetzung allerdings vorher auf oberhalb 120 °C erhitzt werden, bevor die Vernetzung mit Polyamin-Komponenten erfolgen kann.

Zusammensetzungen für Coatings basierend auf (Per)fluoropolyethern (PFPE) werden in der EP 1 116 759 A1 beschrieben. Sie beinhalten neben Lösemittel bifunktionelle (Per)fluoropolyetherdiole in Verbindung mit IPDI-Trimeren. Die (Per) fluoropolyether sind in dieser Anmeldung nicht seitenständig eingebaut.

Fluorierte verzweigte Oligourethane hergestellt aus Monomeren bzw. Makromonomeren wie Polyisocyanat in blockierter Form, einer hydrophilen Alkohol oder Thiol-Komponente, mono- und bifunktionelle Hydroxyl-(per) fluoropolyetheralkohole sowie monofunktionelle (Per)fluoralkylalkohole sowie chemisch vernetzbare Alkohol- bzw. Thiol-Komponenten offenbart die Anmeldung EP 1 059 319 A2. Auch hier sind die (Per)fluoropolyetherverbindungen nicht seitenständig.

Wasserbasierende Copolymer-Dispersionen bzw. -Emulsionen basierend auf Perfluoralkylgruppen-haltigen Monomeren sind schon seit längerem bekannt. Sie dienen zur Hydro- und Oleophobierung vor allem von Textilien bzw. Teppichen auch in Verbindung mit weiteren Textilhilfsmitteln, vorausgesetzt die Perfluoralkylgruppen sind linear und enthalten mindestens 6 Kohlenstoff-Atome.

Zur Herstellung dieser Copolymer-Dispersionen bzw. Emulsionen via Emulsionspolymerisation werden unterschiedliche Emulgatorsysteme verwendet und man erhält je nach Art des verwendeten Emulgatorsystems anionisch oder kationisch stabilisierte Copolymer-Dispersionen bzw. -Emulsionen mit unterschiedlichen anwendungstechnischen Eigenschaften.

Wässrige Dispersionen von Perfluoralkylgruppen enthaltenden Pfropfcopolymerisaten und ihre Verwendung als Hydrophobierungs- und Oleophobierungsmittel sind aus der Patentliteratur bereits seit einiger Zeit bekannt.

Die EP 0 452 774 A1 und DE 34 07 362 A1 beschreiben ein Verfahren zur Herstellung von wässrigen Dispersionen von Copolymerisaten und/oder Pfropfcopolymerisaten aus ethylenisch ungesättigten Perfluoralkylmonomeren und nicht-fluormodifizierten ethylenisch ungesättigten Monomeren, wobei als Pfropfgrundlage wässrige emulgatorfreie Polyurethan-Dispersionen verwendet wurden.

In der DE 36 07 773 C2 werden Perfluoralkylliganden enthaltende Polyurethane beschrieben, die in Form einer wässrigen Dispersion, jedoch unter Verwendung externer Emulgatoren, oder in Form einer Lösung in einem organischen Lösemittel (gemisch) ausschließlich zur Ausrüstung von Textilmaterialien und von Leder verwendet werden.

Perfluoralkylgruppen enthaltende Polyurethane zur Oleophob- und Hydrophob-Ausrüstung von Textilien sind auch in den Patentdokumenten DE 14 68 295 A1, DE 17 94 356 A1, DE 33 19 368 A1, EP 0103 752 A1, US 3,398,182 B1, US 3,484,281 B1 und US 3,896,251 B1 beschrieben. Diese Verbindungen erfordern allerdings für die Anwendung große Mengen und zeigen eine ungenügende Haftung auf dem Substrat.

Die WO 99/26 992 A1 beschreibt wässrige fluor- und/oder silikonmodifizierte Polyurethan-Systeme mit geringen Oberflächenenergien, die zu wasser- und lösemittelstabilen harten Polyurethan-Filmen mit anti-fouling Eigenschaften aushärten, wobei folgende beiden Perfluoralkyl-Komponenten offenbart werden:

R_{f}-SO₂N-(Rₕ-OH)₂

mit R_{f} = Perfluoralkyl-Gruppe mit 1-20 C-Atomen und Rₕ = Alkyl-Gruppe mit 1-20 C-Atomen und

R_{f}R'_{f}CF-CO₂CH₂CR(CH₂OH)₂

mit R_{f} = C₄-C₆-Fluoralkyl, R_{f}= C₁-C₃-Fluoralkyl und R = C₁-C₂-Alkyl.

In Wasser dispergierbare Sulfo-Polyurethan- oder Sulfo-Polyharnstoff-Zusammensetzungen mit niedriger Oberflächenenergie, speziell für tinteaufnehmende Beschichtungen, werden in der EP 0 717 057 B1 beschrieben, wobei die hydrophoben Segmente aus Polysiloxan-Segmenten oder einer gesättigten fluoraliphatischen Gruppe mit 6-12 Kohlenstoff-Atomen bestehen, von denen wenigstens 4 vollständig fluoriert sind.

Wässrige Dispersionen von wasserdispergierbaren Polyurethanen mit PerfluoralkylSeitenketten ohne die Verwendung externer Emulgatoren sind aus der EP 0 339 862 A1 bekannt. Als Isocyanat-reaktive Komponente wurde hier ein fluoriertes Polyol verwendet, das durch freie radikalische Addition eines Polytetramethylenglykols an ein fluoriertes Olefin (siehe EP 0 260 846 B1) erhalten worden ist. Die erhaltenen Polyurethan-Dispersionen besitzen aber durchweg Festkörpergehalte von unter 30 Gew.-% und benötigen zudem erhebliche Mengen an hydrophiler Komponente. Die Oberflächenenergien der getrockneten Filme betragen immer noch > 30 dyne cm⁻¹.

In der US 4,636,545 werden wässrige Polyurethan-Dispersionen mit ggf. darin emulgierten blockierten Polyisocyanaten als Pfropfgrundlage zur radikalischen Pfropfung eines Polymerisats von ungesättigten Perfluoralkylmonomeren (M > 367 Dalton) und ggf. ungesättigten Comonomeren (in Lösemittel oder wässriger Emulsion) für die Hydro- und Oleophobierung von Textilien, natürlichen und synthetischen Fasern, Papier und Leder beschrieben. Der Festkörpergehalt beträgt 5 bis 50 Gew.-%, vorzugsweise 10 bis 30 Gew.-%, der Fluorgehalt 6 bis 50 Gew.-%, vorzugsweise 10 bis 30 Gew.-%. Die fluorierte Seitenkette wird nicht als Monomer in die PU-Hauptkette eingebaut, sondern als ungesättigte Fluorverbindung auf die Hauptkette einer fertigen PU-Dispersion radikalisch aufgepfropft. Dazu wird die ungesättigte Verbindung in Form einer Emulsion (lösemittelhaltig) der Polyurethan-Dispersion zugegeben.

Die US 5,703,194 beschreibt die kationische Polymerisation von Oxetanmonomeren mit perfluorierten Alkoxyseitenketten zur Herstellung von hydroxyfunktionellen Prepolymeren. Es werden jedoch keine wässrigen Systeme offenbart. Bedingt durch die Polyetherhauptkette sind die Systeme nicht UV-stabil.

In der EP 1 162 220 A1 werden kationische Polyurethan-Dispersionen, die thermisch nachvernetzbar sind, beschrieben. Die verwendeten Perfluoropolyether werden als Diol- oder Monolkomponente in die Hauptkette eingebaut. Die Molekularmassen der Polyurethane sind kleiner oder gleich 9000 Dalton.

Aus der WO 02/04 538 sind Systeme bekannt, bei denen Perfluoralkylseitenketten über Perfluorooxetanpolyol-Copolymere eingeführt werden. Bedingt durch die Polyetherhauptkette sind die Systeme nicht UV-stabil.

In der JP 09118843 werden wasserbasierende Zusammensetzungen aus fluormodifizierten Phosphorsäureestersalzen und einer niedermolekularen Urethanverbindung mit einem oder mehreren Perfluoralkylresten zur Vermeidung von Verfärbungen auf der Oberfläche von Abdichtungen an Stoßfugen beschrieben. Bei dieser Anmeldung handelt es sich nicht um ein PUR-Polymercoating.

In WO 03/072667 A wird ein wässriges fluormodifiziertes Polyurethansystem für ein- oder zweikomponentige Anti-Graffiti- und Anti-Soiling-Beschichtungen beschrieben, welches erhältlich ist durch (a) die Herstellung einer Bindemittel-Komponente auf Basis einer wässrigen Lösung oder Dispersion von gegebenenfalls hydroxy- und/oder aminofunktionellen Oligo- bzw. Polyurethanen mit fluorierten Seitenketten sowie gegebenenfalls, (b) die anschliessende Umsetzung der Bindemittel-Komponente mit einer Vernetzer-Komponente. Es wurde gefunden, dass die durch die im Oligo- oder Polyurethan-Polymer enthaltenen fluorierten Seitengruppen bewirkte Hydrophobierung der Bindemittel-Komponente nicht zu einer Erhöhung der anionischen Hydrophilierung mit Salzgruppen führt und dass die ausgehärteten Filme bereits mit sehr geringen Fluorgehalten sehr niedrige Oberflächenenergien aufweisen. Die in WO 03/072667 A vorgeschlagenen wässrigen hochvemetzten Anti-Graffiti- und Anti-Soiling Polyurethan-Beschichtungssysteme eignen sich einzeln oder in Kombination zum Systemaufbau von (α) schmutzabweisenden Anti-Graffiti-Coatings auf Kunststoff, Holz oder Metall, (β) schmutzabweisenden Beschichtungen von Rotoren für Windkraftanlagen sowie, (γ) schmutzabweisenden Bodenbelägen im Innen- und Aussenbereich.

Der vorliegenden Erfindung lag daher die Aufgabe zugrunde, fluormodifizierte Reaktivharzsysteme mit verbesserten Oberflächeneigenschaften zur permanenten öl- und wasserabweisenden Oberflächenbehandlung bzw. -modifizierung von mineralischen und nichtmineralischen Untergründen für verschiedene Anwendungsbereiche zu entwickeln, welche die genannten Nachteile des Standes der Technik zumindest teilweise überwinden, gute anwendungstechnische Eigenschaften besitzen bzw. unter Berücksichtigung ökologischer, ökonomischer und physiologischer Aspekte hergestellt werden können.

Diese Aufgabe wurde erfindungsgemäß durch die Bereitstellung von fluormodifizierten Reaktivharzsystemen mit verbesserten Oberflächeneigenschaften gelöst, umfassend
a) 100 bis 300 Gewichtsteile einer zur Polyaddition und/oder Polykondensation befähigten Bindemittel-Komponente (A), umfassend
   a₁) ein silanterminiertes Harz mit einer Molekularmasse von 1.000 bis 250.000 Dalton und 0,1 bis 50 Gew.-% an freien Alkoxysilan-Gruppen mit beliebigem Substitutionsmuster bezogen auf die Gesamtmasse an Harz
      oder
   a₂) ein Polyol- und/oder Polyamin-Gemisch auf Basis von niedermolekularen und/oder höhermolekularen (polymeren) Verbindungen mit einer. Molekularmasse von 60 bis 10.000 Dalton und 1 bis 50 Gew.-% an freien Hydroxyl-Gruppen und/oder 1 bis 50 Gew.-% an freien Amin-Gruppen bezogen auf die Gesamtmasse an Harz
      oder
   a₃) ein Epoxidharz mit einer Molekularmasse von 100 bis 10.000 Dalton und 0,1 bis 50 Gew.-% an freien Epoxid-Gruppen bezogen auf die Gesamtmasse an Harz
      oder
   a₄) ein (Meth)acrylatharz mit einer Molekularmasse von 2.500 bis 250.000 Dalton und 0,1 bis 25 Gew.-% an freien Hydroxyl-Gruppen bezogen auf die Gesamtmasse an Harz
      oder
   a₅) ein anderes Polymerisat auf Basis anionisch, kationisch oder radikalisch polymerisierbarer Monomere mit 0,1 bis 25 Gew.-% an freien Hydroxyl-Gruppen bezogen auf die Gesamtmasse an Harz
      oder
      geeignete Kombination daraus,
      wobei die Bindemittel-Komponente (A) jeweils einen Festkörpergehalt von 5 bis 95 Gew.% an Polymer aufweist,
b) 5 bis 100 Gewichtsteile einer zur Polyaddition und/oder Polykondensation befähigten Funktionalisierungs-Komponente (B), mit einer Molmasse von 100 bis 10.000 Dalton und einem polymer gebundenen Fluorgehalt von 10 bis 90 Gew.-%, enthaltend jeweils eine oder mehrere reaktive aliphatische und/oder aromatische primäre und/oder sekundäre (blockierte) Amino-, Hydroxyl-, Mercapto-, (blockierte) Isocyanat-, Alkoxysilan-, Epoxid- oder Aziridin- oder (Meth)acrylat-Gruppe(n), umfassend
   b₁) (Per)fluoroalkylalkylenamine oder (Per)fluoroalkylalkylenalkohole oder (Per)fluoroalkylalkylenmercaptane oder (Per)fluoroalkylalkylenisocyanate oder (Per)fluoroalkylalkylenoxide oder (Per)fluoroalkylalkylensilane oder (Per)fluoroalkylalkylenaziridine oder Alkyl(per)fluoro(meth)acrylate oder (Per)fluoroalkyl(meth)acrylate oder (Per)fluoroalkyl(per)fluoro(meth)acrylate oder
   b₂) Umsetzungsprodukte aus (Per)fluoroalkylalkylenaminen oder (Per) fluoroalkylalkylenalkoholen, Düsocyanaten und Diethanolamin, wobei vorzugsweise Perfluoralkylalkylenalkohole mit terminalen Methylen-Gruppen (Kohlenwasserstoff-Spacern) der allgemeinen Formel

      CF₃-(CF2)ₓ-(CH2)_{y}-OH,

      mit x = 3 - 20 und y = 1 - 6
      oder Hexafluorpropenoxid (HFPO)-Oligomer-Alkohole der allgemeinen Formel

      CF₃CF₂CF₂O-(CF(CF₃)CF₂O)_{z}-CF(CF₃)CH₂-OH,

      mit z = 1 - 10
      oder Gemische aus diesen eingesetzt werden,
      oder
   b₃) Umsetzungsprodukte aus (Per)fluoroalkylalkenen und Diethanolamin oder Alkoxysilanen oder anderen Verbindungen mit einer Aminogruppe und einer oder mehreren Hydroxyl-Gruppen, wobei vorzugsweise (Per) fluoralkylalkene mit terminalen Vinyl-Gruppen (Kohlenwasserstoff Spacern) der allgemeinen Formel

      CF₃-(CF₂)ₓ-CH=CH₂,

      mit x = 3 - 20
      oder Gemische aus diesen eingesetzt werden,
      oder
   b₄) Umsetzungsprodukte aus Alkyl(per)fluoro(meth)acrylaten oder (Per) fluoroalkyl(meth)acrylaten oder (Per)fluoroalkyl-(per)fluoro(meth)acrylaten und Diethanolamin oder anderen Verbindungen mit einer Amino-Gruppe und einer oder mehreren Hydroxyl-Gruppe(n)
      oder
   b₅) Umsetzungsprodukte aus (Per)fluoroalkylalkylenoxiden und N-Methylethanolamin oder Diethanolamin oder anderen Verbindungen mit einer Amino-Gruppe und einer oder mehreren Hydroxyl-Gruppe(n)
      oder
   b₆) Umsetzungsprodukte aus (Per)fluoroalkylalkylenoxiden und primären und/oder sekundären Aminen oder Polyaminen oder Aminoalkylalkoxysilanen oder Isocyanatoalkylalkoxysilanen
      oder
   b₇) Umsetzungsprodukte aus Polyisocyanaten und (Per) fluoroalkylalkylenalkoholen sowie ggf. Aminoalkylalkoxysilanen bzw. Epoxyalkoxysilanen oder (Per)fluoroalkylalkylenaminen sowie ggf. Aminoalkylalkoxysilanen bzw. Epoxyalkoxysilanen oder (Per)fluoroalkylalkylenoxiden oder Per)fluoroalkylalkylencarbonsäuren
      oder
   b₈) Umsetzungsprodukte aus (Per)fluoroalkylalkylenalkoholen oder (Per)fluoroalkylalkylenaminen und Isocyanatoalkylalkoxysilanen oder Epoxyalkoxysilanen oder
   b₉) reaktive polyhedrale oligomere Polysilasesquioxane (POSS) der allgemeinen Formel
      (RₐX_{b}SiO_{1.5})ₘ
      mit a = 0 oder 1, b = 0 oder 1, a + b = 1, m = 4, 6, 8, 10, 12 und R, X = beliebiger anorganischer und/oder organischer und ggf, polymerer Rest mit 1 bis 250 C-Atomen und 0 bis 50 N- und/oder 0 bis 50 O- und/oder 10 bis 100 F- und/oder 0 bis 50 Si- und/oder 0 bis 50 S-Atomen
      oder geeignete Kombination daraus,
c) 0 bis 100 Gewichtsteile einer zur Polyaddition und/oder Polykondensation befähigten Härter-Komponente (C) mit einer Molekularmasse von 100 bis 10.000 Dalton, enthaltend jeweils eine oder mehrere reaktive aliphatische und/oder aromatische primäre und/oder sekundäre (blockierte) Amino-, Hydroxyl-, Mercapto-, (blockierte) Isocyanat- oder Aziridin-Gruppe(n) und/oder Wasser, sowie
d) 0 bis 300 Gewichtsteile einer Formulierungs-Komponente (D), wobei die Komponente (A) die Komponente (B) ggf. in (polymer)gebundener Form enthalten und einen (polymer)gebundenen Fluorgehalt von 0,1 bis 75 Gew.-% aufweisen kann.

Überraschenderweise wurde gefunden, dass durch die Verwendung von fluormodifizierten Reaktivharzsystemen auf Basis von zur Polyaddition und/oder Polykondensation befähigten Bindemittel-Komponenten, speziellen Funktionalisierungs-Komponenten und Härtern nicht nur harte Beschichtungssysteme bzw. Oberflächen mit sehr niedrigen kritischen Oberflächenspannungen γ_{c} (geringer als Teflon mit 18,6 mN/m) und sehr hohen Kontaktwinkeln θ (im Bereich von Teflon^{®} mit 111 °) bereitgestellt werden können, sondern dass diese darüber hinaus auch noch eine gegenüber dem bekannten Stand der Technik deutlich verringerte Anschmutzungsneigung ("dirt pickup") aufweisen. Dies kann dadurch bewirkt werden, dass die Funktionalisierungs-Komponenten fluormodifizierte Strukturelemente aufweisen, die über geeignete Makromonomere oder Telechele eingeführt werden können. Die erfindungsgemäßen Reaktivharzsysteme verfügen im Vergleich mit bekannten fluormodifizierten Beschichtungssystemen, bei denen nur das Bindemittel fluormodiziert ist, über ein deutlich verbessertes Eigenschaftsbild. Offensichtlich wird durch die Verwendung von fluormodifizierten Makromonomeren oder Telechelen als Einzelaufbau-Komponenten eine bessere Orientierung der (Per)fluoroalkyl-Gruppen an der Grenzfläche Beschichtungssystem/Luft erreicht, was nicht vorhersehbar war. Dieses Eigenschaftsprofil kann bereits mit sehr geringen Fluor-Gehalten (1 bis 5 Gew.-% bezogen auf das formulierte Gesamtsystem) bzw. mit sehr geringen Mengen an Härtern erzielt werden. Zudem war nicht hervorsehbar, dass die fluormodifizierten Reaktivharzsysteme auch lösemittelfrei bzw. lösemittelarm hergestellt werden können.

Für die Bindemittel-Komponente (A), die Funktionalisierungs-Komponente (B) und die Härter-Komponente (C) kommen bevorzugt die in Tabelle 1 aufgelisteten Kombinationen in Frage, wobei ggf. eine Formulierungs-Komponente (D) anwesend sein kann. Art und Menge der funktionellen Gruppen in den Komponenten (A), (B) und (C) werden so gewählt, dass ein hinreichend reaktives System entsteht.

Der Ausdruck "hinreichend reaktives System" bedeutet, dass die Molverhältnisse bzw. Äquivalentverhältnisse der Komponenten (A), (B) und (C) in Bezug auf die darin enthaltenen funktionellen bzw. reaktiven Gruppen so gewählt werden, dass im Rahmen der Verarbeitungstemperatur (z.B. 0 -150 °C) bei den einzelnen Beschichtungssystemen Verarbeitungszeiten, offene Zeiten und Aushärtungszeiten erzielt werden, die auch bei der Nichtanwesenheit der Komponente (B) und ohne Fluormodifizierung der Komponente (A) erreicht werden (also wie bei den diversen konventionellen Reaktivharzsystemen). Die entsprechenden Werte bewegen sich hierbei bevorzugt in folgendem Rahmen:

| | |
|---|---|
| Verarbeitungszeit: | etwa 1 min - 6 h |
| Offene Zeit: | etwa 1 min -12 h |
| Aushärtungszeit: | etwa 10 min - 24 h |

Für die Funktionalitäten der Bindemittel-Komponente (A), der Funktionalisierungs-Komponente (B) und der Härter-Komponente (C) sind die in Tabelle 1 aufgelisteten Kombinationen bevorzugt, wobei ggf. eine Formulierungs-Komponente (D) anwesend sein kann. Art und Menge der funktionellen Gruppen in den Komponenten (A), (B) und (C) werden so gewählt, dass ein hinreichend reaktives System entsteht.

**Tabelle 1**

| Funktionelle Gruppen in Komponenten | | | Applikation, Reaktionstyp |
|---|---|---|---|
| (A) | (B) | (C) | |
| -NCO | -OH, -NH₍₂₎, -SH | -OH, -NH₍₂₎, -SH | 3K, Polyadd. |
| -NCO | -OH, -NH₍₂₎, -SH | -OH, -NH₍₂₎, -SH | 2K, Polyadd. |
| -NCO | -OH, -NH₍₂₎ latent | Luftfeucht. | 1K, Polyadd. |
| -NCO | -NCO | -OH, -NH₍₂₎, -SH | 2K, Polyadd. |
| -NCO | -NCO | Luftfeucht. | 2K, Polyadd. |
| -NCO | -NCO | Luftfeucht. | 1K, Polyadd. |
| -Si(OR¹)₃₋ₓR²ₓ ¹⁾ | -Si(OR¹)₃₋ₓR²ₓ¹⁾ | Luftfeucht. | 2K, Polykond. |
| -Si(OR¹)₃₋ₓR²ₓ ¹⁾ | -Si(OR¹)₃₋ₓR²ₓ ¹⁾ | Luftfeucht. | 1K, Polykond. |
| -OH / -NH₍₂₎ | -OH, -NH₍₂₎, -SH | -NCO | 3K, Polyadd. |
| -OH / -NH₍₂₎ | -OH, -NH₍₂₎, -SH | -NCO | 2K, Polyadd. |
| -OH / -NH₍₂₎ | -NCO | -NCO | 3K, Polyadd. |
| -OH / -NH₍₂₎ | -NCO | -NCO | 2K, Polyadd. |
| -C₂H₃O ²⁾ | -C₂H₃O²⁾ | -NH₍₂₎ | 3K, Polyadd. |
| -C₂H₃O ²⁾ | -C₂H₃O²⁾ | -NH₍₂₎ | 2K, Polyadd. |
| -C₂H₃O ²⁾ | -NH₍₂₎ | -NH₍₂₎ | 3K, Polyadd. |
| -C₂H₃O ²⁾ | -NH₍₂₎ | -NH₍₂₎ | 2K, Polyadd. |
| -C₂H₃O ²⁾ | -OH, -NH₍₂₎ latent | Luftfeucht | 1K, Polyadd. |
| -CO₂M ⁴⁾ | -C₂H₄N ³⁾ | -C₂H₄N ³⁾ | 3K, Polyadd. |
| -CO₂M ⁴⁾ | -C₂H₄N ³⁾ | -C₂H₄N ³⁾ | 2K, Polyadd. |
| -NCO | -OH, -NH₍₂₎, -SH | - | 2K, Polyadd. |
| -OH / -NH₍₂₎ | -NCO | - | 2K, Polyadd. |
| -C₂H₃O ²⁾ | -NH₍₂₎ | - | 2K, Polyadd. |
| -CO₂M ⁴⁾ | -C₂H₄N ³⁾ | - | 2K, Polyadd. |

| | | | |
|---|---|---|---|
| ¹⁾ mit x = 0, 1, 2 und R¹, R² = Alkyl mit 1 - 10 C-Atomen, bevorzugt 1 -4 C-Atomen, ²⁾ Epoxid-Gruppen ³⁾ Aziridin-Gruppen ⁴⁾ Carboxyl- bzw. Carboxylat-Gruppen aus Bindemittel-Komponente (A) mit M = H, Li, Na, K, HNR₃ und R³= H, Me, Et | | | |

Hierin beschrieben werden lösemittelfreie oder lösemittelhaltige nichtwässrige Polyurethanharze wie Polyurethan-Prepolymere mit einer Molekularmasse von etwa 1000 bis 25 000 Dalton, bevorzugt etwa 1000 bis 10 000 Dalton und einem Gehalt von etwa 0,1 bis 50 Gew.-%, bevorzugt etwa 1 bis 25 Gew.% an freien (blockierten) Isocyanat-Gruppen bezogen auf die Gesamtmasse an Harz.

Weiterhin hierin beschrieben werden lösemittelfreie oder lösemittelhaltige und/oder hybridisierte wässrige Polyurethanharze wie Polyurethan-Dispersionen und Polyurethan-Polymer-Hybrid-Dispersionen, mit einer Molekularmasse von etwa 2 500 bis 250 000 Dalton, bevorzugt etwa 25 000 bis 100 000 Dalton, die ggf. noch mit 0 bis etwa 25 Ges.-%, bevorzugt etwa 0 bis 10 Gew. % an freien Amino-Gruppen und/oder 0 bis etwa 25 Gew.-%, bevorzugt etwa 0 bis 10 Gew.% an freien Hydroxyl-Gruppen und/oder 0 bis etwa 25 Gew.-%, bevorzugt etwa 0 bis 10 Gew. % an freien (blockierten) Isocyanat-Gruppen und/oder 0 bis etwa 25 Gew.-%, bevorzugt etwa 0 bis 10 Gew. % an freien Epoxid-Gruppen bezogen auf die Gesamtmasse an Harz ausgerüstet sein können. Außerdem sind die entsprechenden wässrigen Polyurethanharze anionisch und/oder nichtionisch und/oder kationisch stabilisiert.

Weiterhin werden hierin wässrige und nichtwässrige Polyurethane auf Basis von höhermolekularen (polymeren) Polyolen mit einer oder mehreren gegenüber Isocyanat-Gruppen reaktiven Hydroxyl-Gruppen und einer Molekularmasse von etwa 500 bis 10 000 Dalton, bevorzugt etwa 1000 bis 2 000 Dalton, wie z. B. (hydrophob modifizierten) Polyalkylenglykolen, aliphatischen oder aromatischen Polyestern, Polycaprolactonen, Polycarbonaten, α,ω-Polybutadienpolyolen, α,ω-Polymethacrylatdiolen, α,ω-Polysulfiddiolen, α,ω-Dihydroxyalklydimethylsiloxanen, Hydroxyalkylpolydimethylsiloxanen, hydroxyfunktionellen Epoxid-Harzen, hydroxyfunktionellen Ketonharzen, Alkydharzen, Dimerfettsäuredialkoholen, Umsetzungsprodukten auf Basis von Bisepoxiden und ungesättigten Fettsäuren, weiteren hydroxyfunktionellen Makromonomeren und Telechelen oder geeigneten Kombinationen daraus und/oder niedermolekularen Polyolen mit einer oder mehreren gegenüber Isocyanat-Gruppen reaktiven Hydroxyl-Gruppen und einer Molekularmasse von etwa 10 bis 1000 Dalton, bevorzugt etwa 32 bis 499 Dalton und/oder niedermolekularen anionisch und/oder kationisch und/oder nichtionisch hydrophilierten Polyolen mit einer oder mehreren gegenüber Isocyanat-Gruppen reaktiven Hydroxyl-Gruppen und einer Molekularmasse von etwa 10 bis 5 000, bevorzugt von etwa 104 bis 2 500 Dalton, aliphatischen und/oder aromatischen Polyisocyanaten mit einer oder mehreren reaktiven Isocyanat-Gruppen und einer Molekularmasse von etwa 100 bis 5 000 Dalton, bevorzugt etwa 150 bis 300 Dalton, ggf. aliphatischen und/oder aromatischen Polyaminen mit einer oder mehreren gegenüber Isocyanat Gruppen reaktiven primären und/oder sekundären Amino-Gruppen und einer Molekularmasse von etwa 60 bis 5 000 Dalton, bevorzugt etwa 60 bis 250 Dalton und ggf. Funktionalisierungs-Komponenten (B) beschreiben. Sofern hybridisierte wässrige Polyurethane vorliegen, können neben Polyurethanen auch noch Polymerisate auf Basis von radikalisch polymerisierbaren Monomeren und lipophilen Initiatoren enthalten sein.

Die zur Polyaddition und/oder Polykondensation befähigte Bindemittel-Komponente a₁) umfasst lösemittelfreie oder lösemittelhaltige und/oder hybridisierte silanterminierte Harze, wie silanterminierte Polyurethane bzw. Polyurethanprepolymere (STO, STP, SPUR, Inverse SPUR) und/oder silanterminierte Polyether (STPe) und/oder andere silantermierte Oligomere und/oder Polymere und/oder Hybridpolymere (*block, co, graft, random*) mit terminalen und/oder lateralen Alkoxysilan-Gruppen. Das silanterminierte Harz a₁) besitzt eine Molekularmasse von etwa 1000 bis 2 50 000 Dalton, bevorzugt etwa 5000 bis 25 000 Dalton und weist einen Gehalt von etwa 0,1 bis 50 Gew.-%, bevorzugt etwa 0,5 bis 25 Gew.% an freien Alkoxysilan-Gruppen mit beliebigem Substitutionsmuster bezogen auf die Gesamtmasse an Harz auf.

Die zur Polyaddition und/oder Polykondensation befähigte Bindemittel-Komponente a₂) umfasst lösemittelfreie oder lösemittelhaltige und/oder hydrophilierte und/oder wässrige Polyol- und/oder Polyamin-Gemische enthaltend kommerziell verfügbar niedermolekulare oder höhermolekulare polymere Amine oder Alkohole oder höhermolekulare polymere Polyaddukte und/oder Polykondensate enthaltend Amino- und/oder Hydroxyl-Gruppen. Das Polyol- und/oder Polyamingemisch a₂) besitzt eine Molekularmasse von etwa 60 bis 100 000 Dalton, z.B. 60 000 bis 100 000 Dalton, bevorzugt etwa 60 bis 10 000, insbesondere etwa 60 bis 1000 Dalton und weist einen Gehalt von etwa 1 bis 50 Gew.-%, bevorzugt etwa 1 bis 25 Gew. % an freien Hydroxyl-Gruppen und/oder etwa 1 bis 50 Gew.-%, bevorzugt etwa 1 bis 25 Gew.% an freien Amin Gruppen bezogen auf die Gesamtmasse an Harz auf.

Die zur Polyaddition und/oder Polykondensation befähigte Bindemittel-Komponente a₃) umfasst lösemittelfreie oder lösemittelhaltige und/oder hydrophilierte und/oder wässrige Epoxidharze wie beispielsweise Bisphenol-A-Diglycidether, Bisphenol-F-Diglycidether und deren höheren Homologen, Phenol-Novolak-Harzen sowie Reaktivverdünnern und Extendern. Die Epoxidharze a₃) besitzen ein Molekularmasse von etwa 100 bis 10 000 Dalton, bevorzugt etwa 200 bis 2 000 Dalton und weisen einen Gehalt von etwa 0,1 bis 50 Gew.-%, bevorzugt etwa 1 bis 25 Gew. % an freien Epoxid-Gruppen bezogen auf die Gesamtmasse an Harz auf.

Als geeignete Reaktivverdünner können beispielsweise Glycidylether mono- oder polyfunktioneller Alkohole wie z. B. 1,4-Butandiol, 1,4-Cyclohexandimethanol, n-Dodecanol, 1,6-Hexandiol, Kresol, Neopentylglykol, Polyethylenglykol, Polypropylenglykol, n-Tetradecanol, Trimethylolpropan oder geeignete Kombination daraus eingesetzt werden. Als geeignete Extender können beispielsweise Alkohole wie z. B. Benzylalkohol oder geeignete Kombination daraus eingesetzt werden.

Die zur Polyaddition und/oder Polykondensation befähigte Bindemittel-Komponente a₄) umfasst lösemittelfreie oder lösemittelhaltige und/oder wässrige (Meth) acrylatharze wie Dispersionen und Lösungen von Polyhydroxypoly(meth)acrylaten, die eine Molekularmasse von etwa 2 500 bis 250 000 Dalton, bevorzugt etwa 25 000 bis 100 000 Dalton besitzen und einen Gehalt von etwa 0,1 bis 25 Gew.-%, bevorzugt etwa 1 bis 10 Gew. % an freien Hydroxyl-Gruppen bezogen auf die Gesamtmasse an Harz aufweisen.

Die zur Polyaddition und/oder Polykondensation befähigte Bindemittel-Komponente a₅) umfasst lösemittelfreie oder lösemittelhaltige und/oder hydrophilierte und/oder wässrige Polymerisaten auf Basis anionisch, kationisch oder radikalisch polymerisierbarer Monomere mit etwa 0,1 bis 25 Gew.-%, bevorzugt etwa 1 bis 10 Gew. % an freien Hydroxyl-Gruppen bezogen auf die Gesamtmasse an Harz oder geeigneten Kombinationen daraus. Als geeignete Polymerisate können alle Umsetzungsprodukte auf Basis anionisch, kationisch oder radikalisch polymerisierbarer Monomere aller Art mit mindestens einer polymerisierbaren Doppelbindung und beliebigem Substitutionsmuster eingesetzt werden.

Die Bindemittel-Komponente (A) mit einem Festkörpergehalt von etwa 5 bis 95 Gew.-%, bevorzugt etwa 10 bis 90 Gew.%, kann die Funktionalisierungs-Komponente (B) in polymer gebundener Form enthalten und einen (polymer) gebundenen Fluorgehalt von etwa 0,1 bis 75 Gew.-%, bevorzugt etwa 0,5 bis 5 Gew. % aufweisen. In diesem Fall liegen vorgefertigte Umsetzungsprodukte der den Komponente a1) bis a₅) zugrunde liegenden und dem Stand der Technik entsprechenden Aufbaukomponenten und der Komponente (B) vor. Die Komponente (B) kann dabei durch geeignete Polymerisationsreaktionen, z.B. durch Polyaddition, Polykondensation, anionische, kationische oder radikalische Polymerisation und/oder durch polymeranaloge Reaktionen in die Komponente (A) eingeführt werden. Dabei ist es unerheblich, ob die Komponente (A) bereits bei ihrer Herstellung oder erst nachträglich mit der Komponente (B) chemisch modifiziert wird.

Die Komponenten (A) und (B) können die in der Hauptkette und/oder Seitenkette angeordneten Strukturelemente
-(CF₂CF₂)ₙ- mit n ≥ 3
und/oder
-(CF₂CFRO)ₙ- mit n ≥ 3 und R = F, CF3
beinhalten.

Bei der zur Polyaddition und/oder Polykondensation befähigten Funktionalisierungs-Komponente (B) handelt es sich um (per)fluoroalkylmodifizierte Verbindungen bzw. deren Isomerengemische oder um geeignete Umsetzungsprodukte dieser (per) fluoroalkylmodifizierten Verbindungen mit einer Molmasse von etwa 100 bis 10 000 Dalton, bevorzugt etwa 250 bis 5 000 Dalton und einem polymer gebundenen Fluorgehalt von etwa 10 bis 90 Gew.-%, bevorzugt etwa 20 bis 80 Gew.%, enthaltend jeweils eine oder mehrere reaktive aliphatische und/oder aromatische primäre und/oder sekundäre (blockierte) Amino-, Hydroxyl-, Mercapto-, (blockierte) Isocyanat-, Alkoxysilan-, Epoxid- , Aziridin- oder (Meth)acrylat-Gruppe(n).

Vorzugsweise werden
b₁) (Per)fluoroalkylalkylenamine oder (Per)fluoroalkylalkylenalkohole oder (Per) fluoroalkylalkylenmercaptane oder (Per)fluoroalkylalkylenisocyanate oder (Per) fluoroalkylalkylenoxide oder (Per)fluoroalkylalkylensilane oder (Per) fluoroalkylalkylenaziridine oder Alkyl(per)fluoro(meth)acrylate oder (Per)fluoroalkyl(meth)acrylate oder (Per)fluoroalkyl(per)fluoro(meth)acrylate
   oder
b₂) Umsetzungsprodukte aus (Per)fluoroalkylalkylenaminen oder Per) fluoroalkylalkylenalkoholen, Diisocyanaten und Diethanolamin, wobei vorzugsweise Perfluoralkylalkylenalkohole mit terminalen Methylen-Gruppen (Kohlenwasserstoff-Spacern) der allgemeinen Formel

   CF₃-(CF₂)ₓ-(CH₂)_{y}-OH,

   mit x = 3 - 20 und y = 1 - 6,
   wobei bevorzugt x = 5 bis 13 und/oder y = 1 bis 2 ist,
   oder Hexafluorpropenoxid (HFPO)-Oligomer-Alkohole der allgemeinen Formel

   CF₃CF₂CF₂O-CF(CF₃)CF₂O)_{z}-CF(CF₃)CH₂-OH,

   mit z = 1 - 10,
   wobei bevorzugt z = 4 bis 10 ist,
   oder Gemische aus diesen eingesetzt,
   oder
b₃) Umsetzungsprodukte aus (Per)fluoroalkylalkenen und Diethanolamin oder Alkoxysilanen oder anderen Verbindungen mit einer Amino-Gruppe und einer oder mehreren Hydroxyl-Gruppen, wobei vorzugsweise (Per)fluoralkylalkene mit terminalen Vinyl-Gruppen (Kohlenwasserstoff Spacern) der allgemeinen Formel

   CF₃-(CF₂)ₓ-CH=CH₂,

   mit x = 3 - 20,
   wobei bevorzugt x = 5 bis 13 ist,
   oder Gemische aus diesen eingesetzt,
   oder
b₄) Umsetzungsprodukte aus Alkyl(per)fluoro(meth)acrylaten oder (Per)fluoroalkyl (meth)acrylaten oder (Per)fluoroalkyl-(per)fluoro(meth)acrylaten und Diethanolamin oder anderen Verbindungen mit einer Aminogruppe und einer oder mehreren Hydroxyl-Gruppe(n)
   oder
b₅) Umsetzungsprodukte aus (Per)fluoroalkylalkylenoxiden und N-Methylethanolamin oder Diethanolamin oder anderen Verbindungen mit einer Amino-Gruppe und einer oder mehreren Hydroxyl-Gruppe(n)
   oder
b₆) Umsetzungsprodukte aus (Per)fluoroalkylalkylenoxiden und primären und/oder sekundären Aminen oder Polyaminen oder Aminoalkylalkoxysilanen oder Isocyanatoalkylalkoxysilanen
   oder
b₇) Umsetzungsprodukte aus Polyisocyanaten und (Per)fluoroalkylalkylenalkoholen sowie ggf. Aminoalkylalkoxysilanen bzw. Epoxyalkoxysilanen oder (Per)fluoroalkylalkylenaminen sowie ggf. Aminoalkylalkoxysilanen bzw. Epoxyalkoxysilanen oder
   (Per)fluoroalkylalkylenoxiden oder Per)fluoroalkylalkylencarbonsäuren
   oder
b₈) Umsetzungsprodukte aus (Per)fluoroalkylalkylenalkoholen oder (Per)fluoroalkylalkylenaminen und Isocyanatoalkylalkoxysilanen oder Epoxyalkoxysilanen
   oder
b₉) reaktive polyhedrale oligomere Polysilasesquioxane (POSS) der allgemeinen Formel

   (RₐX_{b}SiO_{1.5})ₘ

   mit a = 0 oder 1, b = 0 oder 1, a + b = 1, m = 4, 6, 8, 10, 12, wobei bevorzugt m = 8 ist, und R, X = beliebiger anorganischer und/oder organischer und ggf. polymerer Rest mit etwa 1 bis 250 C-Atomen und 0 bis etwa 50 N- und/oder 0 bis etwa 50 O- und/oder etwa 10 bis 100 F- und/oder 0 bis etwa 50 Si- und/oder 0 bis etwa 50 S-Atomen
   oder geeignete Kombination daraus eingesetzt.

Als geeignete (Per)fluoralkylalkylenalkohole können beispielsweise handelsübliche Gemische aus Perfluoralkylalkoholen (Zonyl^{®} BA, BA L, BA LD, Fa. DuPont de Nemours) oder handelsübliche Gemische aus Hexafluorpropenoxid (HFPO)-Oligomer-Alkoholen (Krytox^{®}, Fa. DuPont de Nemours) oder geeignete Kombination daraus eingesetzt werden.

Als geeignete (Per)fluoroalkylalkylenalkohole können beispielsweise außerdem 2,2-Bis(trifluoromethyl)propanol, 1H,1H-2,5-Di(trifluoromethyl)-3,6-dioxaundecafluorononanol, 1H,1H,7H-Dodecafluoroheptanol, 2,2,3,3,4,4,5,5,6,6,7,7-Dodecafluoro-1,8-octandiol,1H,1H-Heptafluorobutanol, 1H,1H,9H-Hexadecafluorononanol, 1H,1H,3H-Hexafluorobutanol, 2H-Hexafluoro-2-propanol, 2,2,3,3,4,4,5,5-Octafluoro-1,6-hexanediol, 1H,1H,5H-Octafluoropentanol, 1H,1H-Pentafluoropropanol, 2-(Perfluorobutyl)ethanol, 3-(Perfluorobutyl)propanol, 6-(Perfluorobutyl)hexanol, 1H,1H-Perfluoro-1-decanol, 2-(Perfluorodecyl)ethanol, 6-(Perfluoroethyl)hexanol, 2-(Perfluorohexyl)ethanol, 6-(Perfluorohexyl)hexanol, 3-(Perfluorohexyl)propanol, 1H,1H-Perfluoro-1-nonanol, 1H,1H-Perfluoro-1-octanol, 2-(Perfluorooctyl)ethanol, 6-(Perfluorooctyl)hexanol, 3-(Perfluorooctyl)propanol, 2-(Perfluoro-3-methylbutyl)ethanol, 6-(Perfluoro-1-methylethyl)hexanol, 2-(Perfluoro-5-methylhexyl)ethanol, 2-(Perfluoro-7-methyloctyl)ethanol,2-Perfluoropropoxy-2,3,3,3-tetrafiuoropropanol,1H,1H,3H-Tetrafluoropropanol, 1,1,2,2-Tetrahydroperfluoro-1-hexadecanol, 1,1,2,2-Tetrahydroperfluoro-1-tetradecanol sowie 1H, 1H-Trifluoroethanol oder deren technische Isomerengemische, die Handelsprodukte Fluowet^{®} EA 600, EA 800, EA 093, EA 612, EA 612 N, EA 812 AC, EA 812 IW, EA 812 EP, EA6/1020 der Fa. Clariant, die Handelsprodukte Zonyl^{®} FSH, FSO, FSN, FS-300, FSN-100, FSO-100 der Fa. DuPont de Nemours oder geeignete Kombinationen daraus eingesetzt werden.

Als geeignete (Per)fluoroalkylalkene können beispielsweise 3,3,4,4,5,5,6,6,6-Nonafluor-1-hexen, 3,3,4,4,5,5,6,6,7,7,8,8,8-Tridecafluor-1-octen, 3,3,4,4,5,5,6,6,7,7,8,8,9,9,10,10,10-Heptadecafluor-1-decen, das Handelsprodukt Zonyl^{®} PFBE der Fa. DuPont de Nemours (Olefin-Basis) oder geeignete Kombination daraus eingesetzt werden.

Als geeignete (Per)fluoroalkyl(meth)acrylate und/oder (Per)fluoroalkyl-(per)fluoro (meth)acrylate können beispielsweise 1H,1H,7H-Dodecafluoroheptylacrylat, 1H,1H,9H-Hexadecafluorononylacrylat,1H,1H,3H-Hexafluorobutylacrylat, 1H,1H,5H-Octafluoropentylacrylat, 2,2,3,3,3-Pentafluoropropylacrylat, 2-(Perfluorobutyl)ethylacrylat, 3-(Perfluorobutyl)-2-hydroxypropylacrylat, 2-(Perfluorodecyl)ethylacrylat, 2-(Perfluorohexyl)ethylacrylat, 3-Perfluorohexyl-2-hydroxypropylacrylat, 2-(Perfluoro-3-methylbutyl)ethylacrylat, 3-(Perfluoro-3-methylbutyl)-2-hydroxypropylacrylat, 2-(Perfluoro-5-methylhexyl)ethylacrylat, 3-(Perfluoro-5-methylhexyl)-2-hydroxypropylacrylat, 2-(Perfluoro-7-methyloctyl) ethylacrylat, 3-(Perfluoro-7-methyloctyl)-2-hydroxypropylacrylat, 2-(Perfluorooctyl) ethylacrylat, 3-Perfluorooctyl-2-hydroxypropylacrylat, 1H,1H,3H-Tetrafluoropropylacrylat, 2,2,2-Trifluoroethylacrylat, 1H-1-(Trifluoromethyl) trifluoroethylacrylat, 1H,1H,7H-Dodecafluoroheptylmethacrylat, 3,3,4,4,5,5,6,6,7,7,8,8,9,9,10,10,10-Heptadecafluorodecylmethacrylat, 1H,1H,9H-Hexadecafluorononylmethacrylat,1H,1H,3H-Hexafluorobutylmethacrylat, 1H,1H,5H-Octafluoropentylmethacrylat, 2,2,3,3,3-Pentafluoropropylmethacrylat, 2-(Perfluorobutyl)ethylmethacrylat, 3-(Perfluorobutyl)-2-hydroxypropylmethacrylat, 2-(Perfluorodecyl)ethylmethacrylat, 2-(Perfluorohexyl)ethylmethacrylat, 3-Perfluorohexyl-2-hydroxypropylmethacrylat, 2-(Perfluoro-3-methylbutyl) ethylmethacrylat, 3-(Perfluoro-3-methylbutyl)-2-hydroxypropylmethacrylat, 2-(Perfluoro-5-methylhexyl)ethylmethacrylat, 3-(Perfluoro-5-methylhexyl)-2-hydroxypropylmethacrylat, 2-(Perfluoro-7-methyloctyl)ethylmethacrylat, 3-(Perfluoro-7-methyloctyl)-2-hydroxypropylmethacrylat, 2-(Perfluorooctyl) ethylmethacrylat, 3-Perfluorooctyl-2-hydroxypropylmethacrylat, 1H,1H,3H-Tetrafluoropropylmethacrylat, 3,3,4,4,5,5,6,6,7,7,8,8,8-Tridecafluorooctylmethacrylat, 2,2,2-Trifluoroethylmethacrylat, 1H-(Trifluoromethyl)trifluoroethylmethacrylat, die Handelsprodukte Zonyl^{®} TA-N (Acrylat-Basis) und TM (Methacrylat-Basis) der Fa. DuPont de Nemours oder geeignete Kombination daraus eingesetzt werden.

Als geeignete (Per)fluoroalkylalkylenoxide können beispielsweise 4,4,5,5,6,6,6-Heptafluorhexen-1,2-oxid, 4,4,5,5,6,6,7,7,7-Nonafluorhepten-1,2-oxid, 4,4,5,5,6,6,7,7,8,8,9,9,9-Tridecafluornonen-1,2-oxid, 4,4,5,5,6,6,7,7,8,8,9,9,10,10,11,11,11-Heptadecafluorundecen-1,2-oxid oder geeignete Kombination daraus eingesetzt werden.

Als geeignetes (Per)fluoroalkylalkoxysilan kann beispielsweise 3,3,4,4,5,5,6,6,7,7,8,8,8-Tridecafluorotriethoxysilan (DYNASILAN^{®} F 8800, F 8261, F 8262, F 8263, Fa. Degussa AG) eingesetzt werden.

Silasesquioxane sind oligomere oder polymere Stoffe, deren vollständig kondensierte Vertreter die allgemeinen Formel (SiO_{3/2}R)ₙ besitzen, wobei n > 4 und der Rest R ein Wasserstoffatom sein kann, meist jedoch einen organischen Rest darstellt. Die kleinste Struktur eines Silasesquioxans ist der Tetraeder. Voronkov und Lavrent'yev (Top. Curr. Chem. 102 (1982), 199-236) beschreiben die Synthese von vollständig kondensierten und unvollständig kondensierten oligomeren Silasesquioxanen durch hydrolytische Kondensation trifunktioneller RSiY₃-Vorstufen, wobei R für einen Kohlenwasserstoffrest mit 1 bis 20, insbesondere 1 bis 4 Kohlenstoffatomen steht und Y eine hydrolisierbare Gruppe, wie z. B. Chlorid, Alkoxid oder Siloxid, darstellt. Lichtenhan et al. beschreiben die basenkatalysierte Herstellung von oligomeren Silasesquioxanen (WO 01/10 871). Silasesquioxane der Formel R₈Si₈C₁₂ (mit gleichen oder unterschiedlichen Kohlenwasserstoffresten R) können basenkatalysiert zu funktionalisierten, unvollständig kondensierten Silasesquioxanen, wie z. B. R₇Si₇O₉(OH)₃ oder auch R₈Si₈O₁₁(OH)₂ und R₈Si₈O₁₀(OH)₄, umgesetzt werden (Chem. Commun. (1999), 2309-10; Polym. Mater. Sci. Eng. 82 (2000), 301-2; WO 01/10 871) und damit als Stammverbindung für eine Vielzahl verschiedener unvollständig kondensierter und funktionalisierter Silasesquioxane dienen. Insbesondere die Silasesquioxane (Trisilanole) der Formel R₇Si₇O₉(OH)₃ lassen sich durch Umsetzung mit funktionalisierten, monomeren Silanen (corner capping) in entsprechend modifizierte oligomere Silasesquioxane überführen.

Vorzugsweise werden reaktive polyhedrale oligomere Polysilasesquioxane (POSS) der allgemeinen Formel

(RₐX_{b}SiO_{1.5})ₘ

mit
- a =: 0 oder 1, b = 0 oder 1, a + b = 1, m = 4, 6, 8, 10, 12, wobei bevorzugt m = 8 ist,
- R =: Wasserstoffatom, Alkyl-, Cycloalkyl-, Alkenyl-, Cycloalkenyl-, Alkinyl-, Cycloalkinyl-Gruppe oder Polymereinheiten, die jeweils substituiert oder unsubstituiert sind oder weitere funktionalisierte polyedrische oligomere Silizium-Sauerstoffclustereinheiten, die über eine Polymereinheit oder eine Brückeneinheit angebunden sind,
und
- X =: Oxy-, Hydroxy-, Alkoxy-, Carboxy-, Silyl-, Alkylsilyl-, Alkoxysilyl-, Siloxy-, Alkylsiloxy-, Alkoxysiloxy-, Silylalkyl-, Alkoxysilylalkyl-, Alkylsilylalkyl-, Halogen-, Epoxy-, Ester-, (Per)fluoralkyl-, Isocyanat-, blockierte Isocyanat-, Acrylat-, Methacrylat-, Nitril-, Amino-, Phosphin-, Polyether-Gruppe oder Substituenten vom Typ R, die mindestens einen Substituenten vom Typ X tragen,
wobei die Substituenten vom Typ R als auch die Substituenten vom Typ X gleich oder unterschiedlich sind, eingesetzt. Gemäß einer bevorzugten Ausführungsform enthält die Komponente (A) die Komponente (B) in polymergebundener Form und weist einen polymergebundenen Fluorgehalt von etwa 0,1 bis 75 Gewichtsprozent, bevorzugt etwa 0,5 bis 5 Gewichtsprozent auf.

Bei der Härter-Komponente (C) handelt es sich beispielsweise um aliphatische und/oder aromatische Polyamine, Polyamidoamine, Polyoxyalkylenamine, niedermolekulare Polyole, hochmolekulare (polymere) Polyole, (wasseremulgierbare) aliphatische und/oder aromatische Polyisocyanate, (wasseremulgierbare) aliphatische und/oder aromatische Polyurethan-Prepolymere mit freien Isocyanat-Gruppen oder freien Hydroxyl-Gruppen oder freien Amino-Gruppen, Polyaziridine oder Luftfeuchtigkeit.

Als geeignete aliphatische Polyamine können beispielsweise 1,3-Pentandiamin (DAMP),2-Methylpentamethylendaimin (MPMDA), Benzylaminopropylamin (BAPA), Bisaminomethylcyclohexan bzw. 1,3-Bis-(aminomethyl)cyclohexan (1,3-BAC), Cyclohexylaminopropylamin (NAPCHA), Diaminocyclohexan bzw. 1,2-Diaminoccylohexan (DAC bzw. DCH), Diethylaminopropylamin (DEAPA), Diethylentriamin bzw.1,4,7-Triazaheptan (DETA), Dimethyl-PACM bzw. Bis-(4,4'-amino-3,3'-methylcyclohexyl)methan (DM-PACM), Dipropylentriamin bzw. 1,5,9-Triazanonan, Ethylendiamin bzw. 1,2-Diaminoethan (EDA), Hexamethylendiamin bzw. 1,8-Diaazaoctan (HMDA), Isophorondiamin bzw. 3-Methylamino-3,5,5-trimethyl-aminocyclohexan (IPD bzw. IPDA), Methylpentamethylendiamin bzw. 2-Methyl-1,7-diaazaheptan, N3-Amin bzw. 1,4,8-Triazaoctan, N4-Amin bzw. 1,5,8,12-Tetraazadodecan, n-Aminethylpiperazin bzw. 1-(2-Aminoethyl)-1,4-diazacyclohexan (NAEP), N-Aminopropylcyclohexylamin (NAPCHA), p-Aminocyclohexylmethan bzw. Bis-(4,4'-aminocyclohexyl)methan (PACM), Pentaethylenhexamin bzw. 1,4,7,10,13,16-Hexaazahexadecan (PEHA), Propylendiamin bzw. 1,5-Diazapentan (PDA), Tetraethylenpentamin bzw. 1,4,7,10,13-Pentaazatridecan (TEPA), Tricyclododecandiamin bzw. 3(4),8(9)-Bis-(aminomethyl)-tricyclo-[5,2,1,0^{2,6}]decan (TCD), Triethylentetramin bzw. 1,4,7,10-Tetraazadecan (TETA), Trimethylhexamethylendiamin bzw. 2,2,4-Trimethyl-1,8-diaazaoctan und/oder 2,4,4-Trimetyl-1,8-diaazaoctan oder geeignete Kombinationen daraus eingesetzt werden.

Als geeignete aromatische Polyamine können beispielsweise Diaminodiphenylmethan bzw. Bis-(4,4'-aminophenyl)methan (DDM), Diaminodiphenylsulfon bzw. Bis-(4,4'-aminophenyl)sulfon (DDS), Diethylaminodiphenylmethan (DEDDM), Diethyltuololdiamin (DETDA), m-Xylylendiamin bzw. 1,3-Bis-(aminomethyl)benzol (mXDA) oder geeignete Kombinationen daraus eingesetzt werden.

Als geeignete aromatische Polyoxyalkylenamine können beispielsweise Polyoxyethylenpolyamine, Polyoxypropylenpolyamine, Polytetrahydrofuranpolyamine, andere Polyoxyalkylenpolyamine auf Basis beliebiger Alkylenoxid oder Gemischen daraus (*co, block, random*) Butandioletherdiamin bzw. 1,14-Diaza-5,10-dioxotetradecan (BDA) oder geeignete Kombinationen daraus eingesetzt werden.

Daneben können Polyaminoamide, Mannichbasen, Epoxidaddukte wie EDA-Addukt, DETA-Addukt, Typ 100, Typ 115, Typ 125, Typ 140, Typ 250 (Genamid), PAA-Addukt oder geeignete Kombinationen daraus eingesetzt werden.

Als geeignete Polyisocyanate können beispielsweise Polyisocyanate, Polyisocyanat-Derivat oder Polyisocyanat-Homologen mit zwei oder mehreren aliphatischen oder aromatischen Isocyanat-Gruppen gleicher oder unterschiedlicher Reaktivität oder geeignete Kombinationen daraus eingesetzt werden. Geeignet sind insbesondere die in der Polyurethan-Chemie hinreichend bekannten Polyisocyanate oder Kombinationen daraus. Als geeignete aliphatische Polyisocyanate können bspw. 1,6-Düsocyanatohexan (HDI), 1-Isocyanato-5-isocyanatomethyl-3,3,5-trimethylcyclohexan bzw. Isophorondiisocyanat (IPDI), Bis-(4-isocyanatocyclo-hexyl)-methan (H₁₂MDI), 1,3-Bis-(1-isocyanato-1-methyl-ethyl)-benzol (m-TMXDI) bzw. technische Isomeren-Gemische der einzelnen aromatischen Polyisocyanate eingesetzt werden. Als geeignete aromatische Polyisocyanate können beispielsweise 2,4-Diisocyanatotoluol bzw. Toluoldiisocyanat (TDI), Bis-(4-isocyanatophenyl)-methan (MDI) und ggf. dessen höhere Homologe (Polymeric MDI) bzw. technische Isomeren-Gemische der einzelnen aromatischen Polyisocyanate verwendet werden. Weiterhin sind auch die sogenannten "Lackpolyisocyanate" auf Basis von Bis-(4-isocyanatocyclo-hexyl)-methan (H₁₂MDI), 1,6-Diisocyanatohexan (HDI), 1-Isocyanato-5-isocyanatomethyl-3,3,5-trimethyl-cyclohexan (IPDI) grundsätzlich geeignet. Der Begriff "Lackpolyisocyanate" kennzeichnet Allophanat-, Biuret-, Carbodiimid-, Isocyanurat-, Uretdion-, Urethan-Gruppen aufweisende Derivate dieser Diisocyanate, bei denen der Rest-Gehalt an monomeren Diisocyanaten dem Stand der Technik entsprechend auf ein Minimum reduziert wurde. Daneben können auch noch modifizierte Polyisocyanate eingesetzt werden, die beispielsweise durch hydrophile Modifizierung von "Lackpolyisocyanaten" auf Basis von 1,6-Diisocyanatohexan (HDI) zugänglich sind.

Als geeignete höhermolekulare (polymere) Polyole können beispielsweise (hydrophob modifizierte) Polyalkylenglykole, aliphatische oder aromatische Polyester, Polycaprolactone, Polycarbonate, α,ω-Polybutadienpolyole, α,ω-Polymethacrylatdiole, α,ω-Polysulfiddiole, α,ω-Dihydroxyalkylpolydimethylsiloxane, Hydroxyalkylpolydimethylsiloxane, hydroxyfunktionelle Epoxid-Harzen, hydroxyfunktionelle Ketonharze, Alkydharze, Dimerfettsäureäialkohole, Umsetzungsprodukten auf Basis von Bisepoxiden und ungesättigten Fettsäuren, weitere hydroxyfunktionellen Makromonomere und Telechele oder geeignete Kombinationen daraus eingesetzt werden.

Als geeignete niedermolekulare Polyole können beispielsweise 1,2-Ethandiol bzw. Ethylenglykol, 1,2-Propandiol bzw. 1,2-Propylenglykol, 1,3-Propandiol bzw. 1,3-Propylenglykol, 1,4-Butandiol bzw. 1,4-Butylenglykol, 1,6-Hexandiol bzw. 1,6-Hexamethylenglykol, 2-Methyl-1,3-propandiol, 2,2-Dimethyl-1,3-propandiol bzw. Neopentylglykol, 1,4-Bis-(hydroxymethyl)-cyclohexan bzw. Cyclohexandimethanol, 1,2,3-Propantriol bzw. Glycerol, 2-Hydroxymethyl-2-methyl-1,3-propanol bzw. Trimethylolethan, 2-Ethyl-2-hydroxymethyl-1,3-propandiol bzw. Trimethylolpropan, 2,2-Bis-(hydroxymethyl)-1,3-propandiol bzw. Pentaerythrit, 2-Hydroxymethyl-3-hydroxypropansäure bzw. Dimethylolessigsäure, 2-Hydroxymethyl-2-methyl-3-hydroxypropansäure bzw. Dimethylolpropionsäure, 2-Hydröxymethyl-2-ethyl-3-hydroxypropansäure bzw. Dimethylolbuttersäure, 2-Hydroxymethyl-2-propyl-3-hydroxypropansäure bzw. Dimethylolvaleriansäure oder geeignete Kombinationen daraus eingesetzt werden.

Bei den Komponenten (B) und (C) kann es sich beispielsweise um Verbindungen mit einer oder mehreren primären oder sekundären Amino- und/oder Hydroxyl-Gruppe (n) in Form von latenten Hartem oder Reaktiwerdünnem auf Basis von Aldiminen und/oder Ketiminen und/oder Enaminen und/oder Oxazolidinen und/oder Polyasparaginsäureestern, spaltproduktfreien latenten Härtern auf Basis von Azetidinen und/oder Diazepinen oder um geeignete Kombinationen daraus handeln. Latentreaktive ("inerte") Komponenten können den potentiellen Reaktionspartnern bereits vor der Reaktion zugesetzt werden und erst bei der eigentlichen Verarbeitung durch Luftfeuchtigkeit und/oder durch entsprechende Verarbeitungsbedingungen aktiviert werden.

Bei der Formulierungs-Komponente (D) handelt es sich beispielsweise um anorganische und/oder organische Füllstoffe, Leichtfüllstoffe, Pigmente und Trägermaterialien, anorganische und/oder organische Nanomaterialien, anorganische und/oder organische Fasern, weitere Polymere und/oder redispergierbare Polymer-Pulver aller Art, Entschäumer, Entlüfter, Gleit- und Verlaufadditive, Substratnetzadditive, Netz- und Dispergieradditive, Hydrophobierungsmittel, Rheologieadditive, Koaleszenzhilfsmittel, Mattierungsmittel, Haftvermittler, Frostschutzmittel, Antioxidantien, UV-Stabilisatoren, Bakterizid, Fungizide, Wasser, Lösemittel und Katalysatoren aller Art. Diese Bestandteile sind aus der Lack- und Beschichtungstechnologie hinreichend bekannt, vgl. dazu auch U. Zorll (Herausg.): Lehrbuch der Lacktechnologie, Curt R. Vincentz Verlag Hannover 1998.

Die Komponenten (B) und/oder (C) und/oder (D) können in beschichteter und/oder mikroverkapselter und/oder trägerfixierter und/oder hydrophilierter und/oder lösemittelhaltiger Form vorliegen. Bei latentreaktiven, beschichteten und/oder mikroverkapselten Systemen kann die Freisetzung der aktiven Komponente(n) den anwendungstechnischen Erfordernissen gemäß verzögert erfolgen, was zu einer Beeinflussung der Reaktivität bzw. der Reaktionszeiten des Gesamtsystems, bestehend aus den Komponenten (A), (B), ggf. (C) und ggf. (D) führt. Bei (latentreaktiven,) trägerfixierten Systemen können alle geeigneten anorganischen und/oder organischen Trägermaterialien verwendet werden. Daneben können die Komponenten (B) und/oder (C) und/oder (D) in beliebiger Kombination und Reihenfolge (z.B. Schichtaufbau) auf die Trägermaterialien appliziert werden, was zu einer Beeinflussung der Reaktivität bzw. der Reaktionszeiten des Gesamtsystems, bestehend aus den Komponenten (A), (B), ggf. (C) und ggf. (D) führen kann. Bei Verwendung von latentreaktiven Komponenten aller Art ergeben sich weitere Freiheitsgrade in Bezug auf die Bereitstellung der Einzelkomponenten des Gesamtsystems, bestehend aus den Komponenten (A), (B), ggf. (C) und ggf. (D). Latentreaktive ("inerte") Komponenten können den potentiellen Reaktionspartnern bereits vor der Reaktion zugesetzt werden und erst bei der eigentlichen Verarbeitung durch Luftfeuchtigkeit und/oder durch entsprechende Verarbeitungsbedingungen aktiviert werden.

Das Equivalent-Verhältnis der reaktiven Gruppen in den Komponenten (A), (B) und (C) wird im Falle einer Aushärtung ohne Wasser (Luftfeuchtigkeit) beispielsweise auf etwa 0,1 bis 10, vorzugsweise auf etwa 0,5 bis 5, eingestellt.

Das nach der Aushärtung erhaltene Polymer, bestehend aus den Komponenten (A), (B) und ggf. (C), weist eine mittlere Molekularmasse (Zahlenmittel) von etwa 50 000 bis 5 000 000 Dalton, bevorzugt etwa 100 000 bis 500 000 Dalton auf.

Ein weiterer Gegenstand der vorliegenden Erfindung betrifft ein Verfahren zur Herstellung der erfindungsgemäßen fluormodifizierten Reaktivharzsysteme, bei dem man
a₁₎ im Falle einer dreikomponentigen Applikation die zur Polyaddition und/oder Polykondensation befähigten Komponenten (A), (B) und (C) in beliebiger Weise abmischt und zur Reaktion bringt, wobei ggf. eine Formulierungs-Komponente (D) anwesend sein kann
   oder
a₂₎ im Falle einer zweikomponentigen Applikation vorgefertigte Gemische der zur Polyaddition und/oder Polykondensation befähigten Komponenten (A) und (B) bzw. (B) und (C) mit den zur Polyaddition und/oder Polykondensation befähigten Komponenten (C) bzw. (A) in beliebiger Weise abmischt oder nur die Komponenten (A) und (B) in beliebiger Weise abmischt und zur Reaktion bringt, wobei ggf. eine Formulierungs-Komponente (D) anwesend sein kann
   oder
a₃₎ im Falle einer einkomponentigen Applikation vorgefertigte Gemische der zur Polyaddition und/oder Polykondensation befähigten Komponenten (A) und (B) mit der Komponente (C) bestehend aus Wasser (Luftfeuchtigkeit) zur Reaktion bringt, wobei ggf. eine Formulierungs-Komponente (D) anwesend sein kann und schließlich
b) die Gemische aus den Stufen a₁), a₂) oder a₃) in beliebiger Weise auf / in das jeweilige Substrat appliziert.

Gemäß einer bevorzugten Ausführungsform wird die Komponente (B) ggf. vor den Stufen a₁) oder a₂) oder a₃) erst hergestellt und die Formulierungs-Komponente (D) bzw. deren Einzelbestandteile vor, während oder nach der Reaktion gemäß den Stufen a₁₎, a₂₎ oder a₃₎ den Komponenten (A), (B) oder (C) bzw. den vorgefertigten Gemischen aus den Komponenten (A) und (B) bzw. (B) und (C) zugemischt.

Die Komponenten (B) und/oder (C) und/oder (D) können in latentreaktiver Form den anderen Komponenten beigemischt und erst bei der Applikation aktiviert werden. Die Reaktionsstufen a₁), a₂), und a₃) werden beispielsweise bei einer Temperatur von etwa 0 bis 150 °C, insbesondere etwa 10 bis 75 °C durchgeführt.

Die Reaktionsstufen a₁), a₂), und a₃) werden bei einer Temperatur von etwa 0 bis 150 °C, bevorzugt etwa 10 bis 75 °C durchgeführt.

Sofern die fluormodifizierten Reaktivharzsysteme Lösemittel und/oder Wasser enthalten, ist darauf zu achten, dass eine hinreichende Mischbarkeit gewährleisten ist

Der Ausdruck "hinreichende Mischbarkeit" bedeutet, dass mit den in der Lack und Beschichtungstechnologie üblichen Mischungstechniken eine Homogenisierbarkeit des Gesamtsystems möglich ist bzw. dass die Kompatibilität der Komponenten (B), (C) und (D) mit der Komponente (A) kompatibel sein müssen (d.h. dass keine Phasentrennung auftritt).

Ein weiterer Gegenstand der vorliegenden Erfindung betrifft die Verwendung der erfindungsgemäßen fluornlodifizierten Reaktivharrsysteme im Bau- oder Industriebereich zur permanenten öl-, wasser- und schmutzabweisenden Oberflächenbehandlung bzw. -modifizierung von mineralischen und nichünineralischen Untergründen, wie
- Anorganische Oberflächen,
   wie z.B. poröse, saugende, raue und polierte Baumaterialien und Bauwerkstoffe aller Art (wie z. B. Beton, Gips, Kieselsäure und Silikate, Kunststein, Naturstein (wie z. B. Granit, Marmor, Sandstein, Schiefer, Serpentin), Ton, Zement, Ziegel) sowie Emaille, Füllstoffe und Pigmente, Glas, Keramik, Metalle und Metalllegierungen,
- Organische Oberflächen,
   wie z. B. Gewebe und Textilien, Holz und Holzwerkstoffe, Holzfurnier, glasfaserverstärkte Kunststoffe (GFK), Kunststoffe, Leder, Naturfasern, polare organische Polymere aller Art, Verbundmaterialien.

Die erfindungsgemäßen fluormodifizierten Reaktivharzsysteme eignen sich zur permanenten öl-, wasser- und schmutzabweisenden Oberflächenbehandlung bzw. -modifizierung in den Anwendungsbereichen

Bau, wie z. B.
- Antigraffiti / Antisoiling Coatings
- Easy-To-Clean Coatings
- weitere Beschichtungen aller Art (wie z. B. Balkonbeschichtungen, Dach (ziegel)beschichtungen, Einbrennlacke, Farben und Lacke, Fassadenfarben, Bodenbeschichtungen, leicht-, mittel und hochbelastbare Industrieböden, Parkdeckbeschichtungen, Sportböden, Pulverbeschichtungen)
- Abdichtungen
- Betonfertigteile
- Betonformteile
- Fliese und Fuge
- Kleb- und Dichtstoffe
- Lärmschutzwände
- Korrosionsschutz
- Putze und Dekorputze
- Wärmedämmverbundsysteme (WDVS) und Wärmedämmsysteme (WDS).

Nichtbau und Industrie, wie z. B.
- Automobilindustrie
- Coil Coatings
- Einbrennlacke
- Gewebe- und Textilbeschichtung
- Glasfassaden und Glasoberflächen
- Keramik und Sanitärkeramik
- Lederzurichtung
- oberflächenmodifizierte Füllstoffe und Pigmente
- Papierbeschichtung
- Rotorenblätter von Windkraftanlagen
- Schiffsfarben.

Die erfindungsgemäßen fluormodifizierten Reaktivharzsysteme eignen sich zudem zur Massenhydrophobierung/-oleophobierung von Beton wie z. B.
- Betonfertigteile
- Betonformteile
- Ortbeton
- Spritzbeton
- Transportbeton.

Die Applikation der erfindungsgemäßen fluormodifizierten Reaktivharzsysteme erfolgt mit den aus der Lacktechnologie bekannten Methoden, wie z.B. Fluten, Gießen, Rakeln, Rollen, Spritzen, Streichen, Tauchen, Walzen.

Die Trocknung und Aushärtung der aus den erfindungsgemäßen fluormodifizierten Reaktivharzsystemen hergestellten Beschichtungen erfolgt im Allgemeinen bei normalen (Außen- und Innen-)Temperaturen im Bereich von etwa 0 bis 50 °C, d.h. ohne spezielles Erhitzen der Beschichtungen, kann jedoch je nach Anwendung auch bei höheren Temperaturen im Bereich von etwa 50 bis 150 °C erfolgen.

Die nachfolgenden Beispiele sollen die Ereindung näher veranschaulichen.

### Beispiele

### Beispiel 1: Fluormodifiziertes Makromonomer (Härter)

In einem Dreihalskolben ausgerüstet mit KPG-Rührer, Thermometer und Stickstoffdeckung wurden 83,06 g Isophorondüsocyanat (IPDI) und 0,1 g T12 DBTL vorgelegt und auf ca. 50°C erwärmt. Anschließend wurden 200 g Fluoralkohol (Fluowet EA 812 AC, Fa. Clariant), der zuvor auf 60°C erwärmt wurde, gleichmäßig über einen Zeitraum von 2 h zur Vorlage unter Rühren zudosiert. Die Temperatur für diesen Reaktionsschritt wurde bei 50-55°C gehalten. Da die Reaktion leicht exotherm ist, muss ggf. etwas gekühlt werden. Nach vollständiger Zugabe des Fluoralkohols wurde noch weitere 2 h bei 50-55°C gerührt. Anschließend wurde der NCO-Wert bestimmt.
Es wurde ein NCO-Wert von 5,65 Gew.-% gefunden (Theorie 5,55 Gew.-%). Anschließend wurden 263 g des Preadduktes langsam unter Rühren zu einer Vorlage aus 36,47 g Diethanolamin und 74,91 g N-Methylpyrrolidon gegeben. Die Temperatur wurde dabei zwischen 55-60°C gehalten. Nach vollständiger Zugabe des Preadduktes wurde noch 0,5 h bei 50-55°C gerührt und das fertige Produkt schließlich abgefüllt.
Das Produkt ist klar, leicht gelb und bei Raumtemperatur etwas viskos.

### Beispiel 2: Polyurethan-Dispersion (Bindemittel)

In einem Vierhalskolben ausgerüstet mit KPG-Rührer, Rückflusskühler, Thermometer und Stickstoffdeckung wurden 100,00 g eines Polycarbonat-Polyols (Handelsname: Desmophen VP LS 2391 der Fa. Bayer), 5,00 g 1,4-Butandiol (Fa. Aldrich), 7,15 g Dimethylolpropionsäure (Handelsname: DMPA^{®} der Fa. Mallinckrodt), 0,1 g Dibutylzinndilaurat (Fa. Aldrich) und 17,50 g N-Methylpyrrolidon (Fa. Aldrich) vorgelegt und bei 60°C gerührt, bis sich die Dimethylolpropionsäure vollständig gelöst hat. Anschließend wurden 63,53 g Isophorondiisocyanat (Fa. Degussa) zugegeben und unter Stickstoffdeckung bei 80 bis 90 °C gerührt, bis der theoretische NCO-Gehalt von 5,52 Gew.-% erreicht wurde. Der Verlauf der Reaktion wurde acidimetrisch verfolgt. Nach Abschluss der Polyadditionsreaktion wurde ein NCO-Gehalt von 5,61 Gew.-% gefunden und das Prepolymer auf 60-65°C abgekühlt. Zur Neutralisation (90 Equivalent-%) des Prepolymers wurden dann 4,85 g Triethylamin zugegeben und 3 Minuten gut eingerührt.
165,00 g des Prepolymers wurden dann unter intensivem Rühren in 236,59 g Leitungswasser dispergiert. Zum Aufbau der Polyurethan-Dispersion wurde mit einem Gemisch aus 9,07 g N-(2-Hydroxyethyl)ethylendiamin (85 Equivalent-%) und 9,07 g Leitungswasser kettenverlängert.

Es wurde eine stabile Polyurethan-Dispersion mit folgender Charakteristik erhalten:

| Aussehen | opak, transluzent |
|---|---|
| Festkörpergehalt | 38 Gew.-% |
| pH-Wert | 7,30 |
| OH-Gehalt | 0,38 Gew.-% |

### Beispiel 3: Fluormodifizierte Polyurethan-Dispersion (Bindemittel)

In einem Vierhalskolben ausgerüstet mit KPG-Rührer, Rückflusskühler, Thermometer und Stickstoff deckung wurden 100,00 g eines Polycarbonat-Polyols (Handelsname: Desmophen VP LS 2391 der Fa. Bayer), 17,80 g des fluormodifizierten Makromonomers aus Beispiel 1, 3,50 g 1,4-Butandiol (Fa. Aldrich), 9,00 g Dimethylolpropionsäure (Handelsname: DMPA^{®} der Fa. Mallinckrodt), 0,1 g Dibutylzinndilaurat (Fa. Aldrich) und 15,00 g N-Methylpyrrolidon (Fa. Aldrich) vorgelegt und bei 60°C gerührt, bis sich die Dimethylolpropionsäure vollständig gelöst hat. Anschließend wurden 69,05 g Isophorondiisocyanat (Fa. Degussa) zugegeben und unter Stickstoffdeckung bei 80 bis 90 °C gerührt, bis der theoretische NCO-Gehalt von 5,41 Gew.-% erreicht wurde. Der Verlauf der Reaktion wurde acidimetrisch verfolgt. Nach Abschluss der Polyadditionsreaktion wurde ein NCO-Gehalt von 5,28 Gew.-% gefunden und das Prepolymer auf 60-65°C abgekühlt. Zur Neutralisation (90 Equivalent-%) des Prepolymers wurden dann 6,11 g Triethylamin zugegeben und 3 Minuten gut eingerührt.
180,00 g des Prepolymers wurden dann unter intensivem Rühren in 259,97 g Leitungswasser dispergiert. Zum Aufbau der Polyurethan-Dispersion wurde mit einem Gemisch aus 9,73 g N-(2-Hydroxyethyl)ethylendiamin (85 Equivalent-%) und 9,73 g Leitungswasser kettenverlängert.

Es wurde eine stabile Polyurethan-Dispersion mit folgender Charakteristik erhalten:

| Aussehen | opak, transluzent |
|---|---|
| Festkörpergehalt | 38 Gew.-% |
| pH-Wert | 7,40 |
| OH-Gehalt | 0,35 Gew.-% |

### Beispiel 4: Fluormodifziertes Reaktivharzsystem (3K)

In 100 g Polyurethan-Dispersion aus Beispiel 2 (OH-Gehalt 0,38 Gew.-%)wurden 3,13 g fluormodifiziertes Makromonomer aus Beispiel 1 (OH-Gehalt 1,57 Gew.-%) mit einem Dissolver eindispergiert. Anschließend wurden 7,59 g Basonat HW 100 (NCO-Gehalt 16,8 Ges.-%, Fa. BASF) mit 0,75 g Proglyde DMM (Fa. Dow Chemicals) verdünnt und in das obige Dispersionsgemisch ebenfalls eindispergiert.

### Beispiel 5: Fluormodifziertes Reaktivharzsystem (3K)

In 100 g fluormodifizierte Polyurethan-Dispersion aus Beispiel 3 (OH-Gehalt 0,35 Gew.-%) wurden 2,0 fluormodifiziertes Makromonomer aus Beispiel 1 (OH-Gehalt 1,57 Gew.-%) mit einem Dissolver eindispergiert. Anschließend wurden 6,73 g Basonat HW 100 (NCO-Gehalt 16,8 Gew.-%, Fa. BASF) mit 0,7 g Proglyde DMM (Fa. Dow Chemicals) verdünnt und in das obige Dispersionsgemisch ebenfalls eindispergiert.

Die Oberflächenenergie beträgt 11 bis 12 mN/m und der Kontaktwinkel θ (Wasser) beträgt 100 bis 110°.

### Beispiel 6: Fluormodifziertes Reaktivharzsystem (2K) (Vergleich)

In 100 g fluormodifizierte Polyurethan-Dispersion aus Beispiel 3 (OH-Gehalt 0,35 Gew.-%) wurden 6,18 g Basonat HW 100 (NCO-Gehalt 16,8 Gew.-%, Fa. BASF), das zuvor mit 0,6 g Proglyde DMM (Fa. Dow Chemicals) verdünnt wurde, mit einem Dissolver eindispergiert.

Die Oberflächenenergie beträgt 12 bis 13 mN/m und der Kontaktwinkel θ (Wasser) beträgt 110 bis 120°.

Die Beschichtungssysteme bzw. Oberflächen gemäß den Beispielen 4 und 5 weisen gegenüber dem nicht erfindungsgemäßen Beispiel 6 verringerte kritische Oberflächenspannungen γ_{c} erhöhte Kontaktwinkel θ und eine deutlich verringerte Anschmutzungsneigung ("dirt pickup") auf.

## Patentansprüche

1. Fluormodifizierte Reaktivharzsysteme mit verbesserten Oberflächeneigenschaften, umfassend
a) 100 bis 300 Gewichtsteile einer zur Polyaddition und/oder Polykondensation befähigten Bindemittel-Komponente (A), umfassend
a₁) ein silanterminiertes Harz mit einer Molekularmasse von 1 000 bis 250 000 Dalton und 0,1 bis 50 Gew.-% an freien Alkoxysilan-Gruppen mit beliebigem Substitutionsmuster bezogen auf die Gesamtmasse an Harz
oder
a₂) ein Polyol- und/oder Polyamin-Gemisch auf Basis von niedermolekularen und/oder höhermolekularen (polymeren) Verbindungen mit einer Molekularmasse von 60 bis 10 000 Dalton und 1 bis 50 Gew.-% an freien Hydroxyl-Gruppen und/oder 1 bis 50 Gew.-% an freien Amin-Gruppen bezogen auf die Gesamtmasse an Harz
oder
a₃) ein Epoxidharz mit einer Molekularmasse von 100 bis 10 000 Dalton und 0,1 bis 50 Gew.-% an freien Epoxid-Gruppen bezogen auf die Gesamtmasse an Harz
oder
a₄) ein (Meth)acrylatharz mit einer Molekularmasse von 2.500 bis 250 000 Dalton und 0,1 bis 25 Gew.-% an freien Hydroxyl-Gruppen bezogen auf die Gesamtmasse an Harz
oder
a₅) ein anderes Polymerisat auf Basis anionisch, kationisch oder radikalisch polymerisierbarer Monomere mit 0,1 bis 25 Gew.-% an freien Hydroxyl-Gruppen bezogen auf die Gesamtmasse an Harz
oder
Kombination daraus,
wobei die Bindemittel-Komponente (A) jeweils einen Festkörpergehalt von 5 bis 95 Ges.% an Polymer aufweist,
b) 5 bis 100 Gewichtsteile einer zur Polyaddition und/oder Polykondensation befähigten Funktionalisierungs-Komponente (B), mit einer Molmasse von 100 bis 10.000 Dalton und einem polymer gebundenen Fluorgehglt von 10 bis 90 Gew.-%, enthaltend jeweils eine oder mehrere reaktive aliphatische und/oder aromatische primäre und/oder sekundäre (blockierte) Amino-, Hydroxyl-, Mercapto-, (blockierte) Isocyanat-, Alkoxysilan-, Epoxid-, Aziridin- oder (Meth)acrylat-Gruppe(n), umfassend
b₁) (Per)fluoroalkylalkylenamine oder (Per)fluoroalkylalkylenalkohole oder (Per)fluoroalkylalkylenmercaptane oder (Per) fluoroalkylalkylenisocyanate oder (Per)fluoroalkylalkylenoxide oder (Per)fluoroalkylalkylensilane oder (Per)fluoroalkylatkylenaziridine oder Alkyl(per)fluoro(meth)acrylate oder (Per)fluoroallcyl(meth)acrylate oder (Per)fluoroalkyl(per)fluoro(meth)acrylate
oder
b₂) Umsetzungsprodukte aus (Per)fluoroalkylalkylenaminen oder (Per) fluoroalkylalkylenalkoholen, Diisocyanaten und Diethanolamin, wobei vorzugsweise Perfluoralkylalkylenalkohole mit terminalen Methylen-Gruppen (Kohlenwasserstoff-Spacern) der allgemeinen Formel
CF₃-(CF₂)ₓ/CH₂)-OH, mit x = 3 - 20 und y = 1 - 6
oder Hexafluorpropenoxid (HFPO)-Oligomer-Alkohole der allgemeinen Formel
CF₃CF₂CF₂O-(CF(CF₃)CF₂O)_{z}-CF(CF₃)CH₂₋OH,
mit z = 1 - 10
oder Gemische daraus,
oder
b₃) Umsetzungsprodukte aus (Per)fluoroalkylalkenen und Diethanolamin oder Alkoxysilanen oder anderen Verbindungen mit einer Aminogruppe und einer oder mehreren Hydroxyl-Gruppen, wobei vorzugsweise (Per) fluoralkylalkene mit terminalen Vinyl-Gruppen (Kohlenwasserstoff Spacern) der allgemeinen Formel
CF₃-(CF₂)ₓ-CH=CH₂,
mit x = 3 - 20
oder Gemische daraus,
oder
b₄) Umsetzungsprodukte aus Alkyl(per)fluoro(meth)acrylaten oder (Per) fluoroalkyl(meth)acrylaten oder (Per)fluoroalkyl-(per)fluoro(meth) acrylaten und Diethanolamin oder anderen Verbindungen mit einer Amino-Gruppe und einer oder mehreren Hydroxyl-Gruppe(n)
oder
b₅) Umsetzungsprodukte aus (Per)fluoroalkylalkylenoxiden und N-Methylethanolamin oder Diethanolamin oder anderen Verbindungen mit einer Amino-Gruppe und einer oder mehreren Hydroxyl-Gruppe(n)
oder
b₆) Umsetzungsprodukte aus (Per)fluoroalkylalkylenoxiden und primären und/oder sekundären Aminen oder Polyaminen oder Aminoamylalkoxysilanen oder Isocyanatoalkylalkoxysilanen
oder
b₇) Umsetzungsprodukte aus Polyisocyanaten und (Per) fluoroalkylalkylenallcoholen sowie ggf. Aminoalkylalkoxysilanen oder Epoxyalkoxysilanen oder (Per)fluoroalkylalkylenaminen sowie ggf. Aminoalkylalkoxysilanen oder Epoxyalkoxysilanen oder (Per) fluoroalkylalkylenoxiden oder Per)fluoroalkylalkylencarbonsäuren
oder
b₈) Umsetzurigsprodukte aus (Per)fluoroalkylalkylenalkoholen oder (Per)fluoroalkylalkylenanaminen und Isocyanatoalkylalkoxysilanen oder Epoxyalkoxysilanen
oder
b₉) reaktive polyhedrale oligomere Polysilasesquioxane (POSS) der allgemeinen Formel
(RₐX_{b}SiO_{1.5})ₘ
mit a = 0 oder 1, b = 0 oder 1, a + b = 1, in = 4, 6, 8, 10, 12 und R, X = beliebiger anorganischer und/oder organischer und ggf. polymerer Rest mit 1 bis 250 C-Atomen und 0 bis 50 N- und/oder 0 bis 50 O- und/oder 10 bis 100 F- und/oder 0 bis 50 Si- und/oder 0 bis 50 S-Atomen
oder geeignete Kombination daraus,
c) 0 bis 100 Gewichtsteile einer zur Polyaddition und/oder Polykondensation befähigten Härter-Komponente (C) mit einer Molekularmasse von 100 bis 10.000 Dalton, enthaltend jeweils eine oder mehrere reaktive aliphatische und/oder aromatische primäre und/oder sekundäre (blockierte) Amino-, Hydroxyl-, Mercapto-, (blockierte) Isocyanat- oder Aziridin-Gruppe(n) und/oder Wasser, sowie
d) 0 bis 300 Gewichtsteile einer Formulienmgs-Komponente (D), wobei die Komponente (A) die Komponente (B) ggf. in polymergebundener Form enthalten und einen (polymer)gebundenen Fluorgehalt von 0,1 bis 75 Gew.-% aufweisen kann.

2. Reaktivharzsysteme nach Anspruch 1, **dadurch gekennzeichnet, dass** es sich bei dem silanterminierten Harz a₁) um ein lösenüttelfreies oder lösemittelhaltiges und/oder hybridisiertes System handelt.

3. Reaktivharzsysteme nach Anspruch 1, **dadurch gekennzeichnet, dass** es sich bei dem silanterminierten Harz a₁) um silanterminierte Polyurethane und/oder silanterminierte Polyether und/oder andere silantemiinierte Oligomere und/oder Polymere und/oder Hybridpolymere mit terminalen und/oder lateralen Alkoxysilan-Gruppen handelt.

4. Reaktivsysteme nach Anspruch 1, **dadurch gekennzeichnet, dass** es sich bei dem Polyol- und/oder Polyamingemisch a₂) um ein lösemittelfreies oder löseinittelhaltiges und/oder hydrophiliertes und/oder wässriges System handelt.

5. Reaktivsysteme nach Anspruch 1, **dadurch gekennzeichnet, dass** es sich bei dem Epoxidharz a₃) um ein lösemittelfreies oder lösemittelhaltiges und/oder hydrophiliertes und/oder wässriges System handelt.

6. Reaktivsysteme nach Anspruch 1, **dadurch gekennzeichnet, dass** es sich bei dem (Meth)acrylatharz a₄) um ein lösemittelfreies oder lösemittelhaltiges und/oder wässriges System handelt.

7. Reaktivsysteme nach Anspruch 1, **dadurch gekennzeichnet, dass** es sich bei dem Polymerisat a₅) um ein lösemittelfreies oder lösemittelhaltiges und/oder wässriges System handelt.

8. Reaktivharzsysteme nach einem der Ansprüche 1 bis 7, **dadurch gekennzeichnet, dass** die Komponenten (A) und (B) die in der Hauptkette und/oder Seitenkette angeordneten Strukturelemente
-(CF₂CF₂)ₙ- mit n ≥ 3
und/oder
-(CF₂CFRO)ₙ₋ mit n ≥ 3 und R = F, CF₃
beinhalten.

9. Reaktivharzsysteme nach einem der Ansprüche 1 bis 8, **dadurch gekennzeichnet, dass** die Komponente (C) aliphatische und/oder aromatische Polyamine, Polyamidoamine, Polyoxyalkylenamine, niedermolekularen Polyole, hochmolekulare (polymere) Polyole, (wasseremulgierbare) aliphatische und/oder aromatische Polyisocyanate, (wasseremulgierbare) aliphatische und/oder aromatische Polyurethan-Prepolymere mit freien Isocyanat-Gruppen oder freien Hydroxyl-Gruppen oder freien Amino-Gruppen, Polyaziridine oder Luftfeuchtigkeit umfasst.

10. Reaktivsysteme nach einem der Ansprüche 1 bis 9, **dadurch gekennzeichnet, dass** die Komponenten (B) und (C) Verbindungen mit einer oder mehreren primären oder sekundären Amino- und/oder Hydroxyl-Gruppe(n) in Form von latenten Hartem oder Reaktiwerdünnern auf Basis von Aldiminen und/oder Ketiminen und/oder Enaminen und/oder Oxazolidinen und/oder Polyasparaginsäureestern, spaltproduktfreien latenten Härtern auf Basis von Azetidinen und/oder Diazepinen oder um geeignete Kombinationen daraus umfassend.

11. Reaktivharzsysteme nach einem der Ansprüche 1 bis 10, **dadurch gekennzeichnet, dass** die Komponente (D) anorganische und/oder organische Füllstoffe, Leichtfüllstoffe, Pigmente und Trägermaterialien, anorganische und/oder organische Nanomaterialien, anorganische und/oder organische Fasern, weitere Polymere und/oder redispergierbare Polymer-Pulver aller Art, Entschäumer, Entlüfter, Gleit- und Verlauf additive, Substratnetzadditive, Netz- und Dispergieradditive, Hydrophobierungsinittel, Rheologieadditive, Koaleszenzhilfsmittel, Mattierungsmittel, Haftvermittler, Frostschutzmittel, Antioxidantien, UV-Stabilisatoren, Bakterizide, Fungizide, Wasser, Lösemittel und Katalysatoren aller Art umfasst.

12. Reaktivharzsysteme nach einem der Ansprüche 1 bis 11, **dadurch gekennzeichnet, dass** die Komponenten (B) und/oder (C) und/oder (D) in beschichteter und/oder mikroverkapselter und/oder trägerfixierter und/oder hydrophilierter und/oder lösemittelhaltiger Form vorliegen.

13. Reaktivharmysteme nach einem der Ansprüche 1 bis 12, **dadurch gekennzeichnet, dass** das Equivalent-Verhältnis der reaktiven Gruppen in den Komponenten (A), (B) und ggf. (C) im Falle einer Aushärtung ohne Wasser (Luftfeuchtigkeit) auf 0,1 bis 10, vorzugsweise 0,5 bis 5, eingestellt wird.

14. Reaktivharzsysteme nach einem der Ansprüche 1 bis 13, **dadurch gekennzeichnet, dass** das nach Aushärtung erhaltene Polymer, umfassend die Komponenten (A), (B) und ggf. (C), eine mittlere Molekularmasse (Zahlenmittel) von 50.000 bis 5.000.000 Dalton aufweist.

15. Verfahren zur Herstellung der Reaktivharzsysteme nach den Ansprüchen 1 bis 14, **dadurch gekennzeichnet, dass** man
a₁) im Falle einer dreikomponentigen Applikation die zur Polyaddition und/oder Polykondensation befähigten Komponenten (A), (B) und (C) in beliebiger Weise abmischt und zur Reaktion bringt, wobei ggf. eine Formulierungs-Komponente (D) anwesend sein kann
oder
a₂) im Falle einer zweikomponentigen Applikation vorgefertigte Gemische der zur Polyaddition und/oder Polykondensation befähigten Komponenten (A) und (B) bzw. (B) und (C) mit den zur Polyaddition und/oder Polykondensation befähigten Komponenten (C) bzw. (A) in beliebiger Weise abmischt oder nur die Komponenten (A) und (B) in beliebiger Weise abmischt und zur Reaktion bringt, wobei ggf. eine Formulierung-Komponente (D) anwesend sein kann
oder
a₃) im Falle einer einkomponentigen Applikation vorgefertigte Gemische der zur Polyaddition und/oder Polykondensation befähigten Komponenten (A) und (B) mit der Komponente (C) bestehend aus Wasser (Luftfeuchtigkeit) zur Reaktion bringt, wobei ggf. eine Formulierungs-Komponente (D) anwesend sein kann
und schließlich
b) die Gemische aus den Stufen a₁), a₂) oder a₃) in beliebiger Weise auf/in das jeweilige Substrat appliziert wird.

16. Verfahren nach Anspruch 15, **dadurch gekennzeichnet, dass** die Komponente (B) vor den Stufen a₁) oder a₂) oder a₃) erst hergestellt wird und die Formulierungs-Komponente (D) bzw. deren Einzelbestandteile vor, während oder nach der Reaktion gemäß den Stufen a₁), a₂) oder a₃) den Komponenten (A), (B) oder (C) bzw. den vorgefertigten Gemischen aus den Komponenten (A) und (B) bzw. (B) und (C) zugemischt wird.

17. Verfahren nach Anspruch 15, **dadurch gekennzeichnet, dass** die Komponenten (B) und/oder (C) und/oder (D) in latentreaktiver Form den anderen Komponenten beigemischt und erst bei der Applikation aktiviert werden.

18. Verfahren nach den Ansprüchen 15 bis 17, **dadurch gekennzeichnet, dass** man die Reaktionsstufen a₁), a₂), und a₃) bei einer Temperatur von 0 bis 150 °C durchführt.

19. Verwendung der Reaktivharzsysteme nach den Ansprüchen 1 bis 14 im Bau- oder Industriebereich zur permanenten öl-, wasser- und schmutzabweisenden Oberflächenbehandlung bzw. -modifizierung von mineralischen und nichtmineralischen Untergründen, wie
• Anorganische Oberflächen,
wie z.B. poröse, saugende, raue und polierte Baumaterialien und Bauwerkstoffe sowie Emaille, Füllstoffe und Pigmente, Glas, Keramik, Metalle und Metalllegierungen,
• Organische Oberflächen,
wie z. B. Gewebe und Textilien, Holz und Holzwerkstoffe, Holzfurnier, glasfaserverstärkte Kunststoffe (GFK), Kunststoffe, Leder, Naturfasern, polare organische Polymere aller Art, Verbundmaterialien.

20. Verwendung der Reaktivharzsysteme nach den Ansprüchen 1 bis 14 zur permanenten öl-, wasser- und schmutzabweisenden Oberflächenbehandlung bzw. -modifizierung im Bereich Bau wie z. B.
• Antigraffiti / Antisoiling Coatings
• Easy-To-Clean Coatings
• weitere Beschichtungen aller Art (wie z. B. Balkonbeschichtungen, Dach (ziegel)beschichtungen, Einbrennlacke, Farben und Lacke, Fassadenfarben, Bodenbeschichtungen, leicht-, mittel und hochbelastbare Industrieböden, Parkdeckbeschichtungen, Sportböden, Pulverbeschichtungen)
• Abdichtungen
• Betonfertigteile
• Betonformteile
• Fliese und Fuge
• Kleb- und Dichtstoffe
• Lärmschutzwände
• Korrosionsschutz
• Putze und Dekorputze
• Wärmedämmverbundsysteme (WDVS) und Wärmedämmsysteme (WDS).

21. Verwendung der Reaktivharzsysteme nach den Ansprüchen 1 bis 14 zur permanenten öl-, wasser- und schmutzabweisenden Oberflächenbehandlung bzw. -modifizierung im Bereich Nichtbau und Industrie, wie z.B.
• Automobilindustrie
• Coil Coatings
• Einbrennlacke
• Gewebe- und Textilbeschichtung
• Glasfassaden und Glasoberflächen
• Keramik und Sanitärkeramik
• Lederzurichtung
• oberflächenmodifizierte Füllstoffe und Pigmente
• Papierbeschichtung
• Rotorenblätter von Windlaaftanlagen
• Schiffsfarben

22. Verwendung der Reaktivharzsysteme nach den Ansprüchen 1 bis 14 im Bau- oder Industriebereich zur Massenhydrophobierung/-oleophobierung von Beton, wie z. B.
• Betonfertigteile
• Betonformteite
• Ortbeton
• Spritzbeton
• Transportbeton.

## Claims

1. Fluorine-modified reactive resin systems having improved surface properties, comprising
a) 100 to 300 parts by weight of a binder component (A) capable of polyaddition and/or polycondensation, comprising
a₁) a silane-terminated resin having a molecular weight of 1,000 to 250,000 dalton and 0.1 to 50% by weight of free alkoxysilane groups having any desired substitution pattern, based on the total mass of resin
or
a₂) a polyol and/or polyamine mixture based on low molecular weight and/or higher molecular weight (polymeric) compounds having a molecular weight of 60 to 10,000 dalton and 1 to 50% by weight of free hydroxyl groups and/or 1 to 50% by weight of free amine groups, based on the total mass of resin,
or
a₃) an epoxy resin having a molecular weight of 100 to 10,000 dalton and 0.1 to 50% by weight of free epoxide groups, based on the total mass of resin,
or
a₄) a (meth)acrylate resin having a molecular weight of 2,500 to 250,000 dalton and 0.1 to 25% by weight of free hydroxyl groups, based on the total mass of resin,
or
a₅) another polymer based on monomers capable of anionic, cationic or free radical polymerization and having 0.1 to 25% by weight of free hydroxyl groups, based on the total mass of resin,
or
a combination thereof,
the binder component (A) having in each case a solids content of 5 to 95% by weight of polymer,
b) 5 to 100 parts by weight of a functionalization component (B) capable of polyaddition and/or polycondensation and having a molar mass of 100 to 10,000 dalton and a polymer-bound fluorine content of 10 to 90% by weight, containing in each case one or more reactive aliphatic and/or aromatic primary and/or secondary (blocked) amino, hydroxyl, mercapto, (blocked) isocyanate, alkoxysilane, epoxide or aziridine or (meth)acrylate group(s), comprising
b₁) (per)fluoroalkylalkylenamines or (per)fluoroalkylalkylene alcohols or (per)fluoroalkylalkylene mercaptans or (per)fluoroalkylalkylene isocyanates or (per)fluoroalkylalkylene oxides or (per)fluoroalkylalkylene silanes or (per)fluoroalkylalkylenaziridines or alkyl (per)fluoro(meth)acrylates or (per)fluoroalkyl (meth)acrylates or (per)fluoroalkyl (per)fluoro(meth)acrylates
or
b₂) reaction products of (per)fluoroalkylalkylenamines or (per)fluoroalkylalkylene alcohols, diisocyanates and diethanolamine, preferably perfluoroalkylalkylene alcohols having terminal methylene groups (hydrocarbon spacers) of the general formula
CF₃-(CF₂)ₓ-(CH₂)_{y}-OH,
where x = 3 - 20 and y = 1 - 6
or hexafluoropropene oxide (HFPO) oligomer alcohols of the general formula
CF₃CF₂CF₂O-(CF(CF₃)CF₂O)_{z}-CF(CF₃)CH₂-OH,
where z = 1 - 10
or mixtures thereof,
or
b₃) reaction products of (per)fluoroalkylalkenes and diethanolamine or alkoxysilanes or other compounds having an amino group and one or more hydroxyl groups, preferably (per)fluoroalkylalkenes having terminal vinyl groups (hydrocarbon spacers) of the general formula
CF₃-(CF₂)ₓ-CH=CH₂,
where x = 3 - 20
or mixtures thereof,
or
b₄) reaction products of alkyl (per)fluoro(meth)acrylates or (per)fluoroalkyl (meth)acrylates or (per)fluoroalkyl (per)fluoro(meth)acrylates and diethanolamine or other compounds having an amino group and one or more hydroxyl group(s)
or
b₅) reaction products of (per)fluoroalkylalkylene oxides and N-methylethanolamine or diethanolamine or other compounds having an amino group and one or more hydroxyl group(s)
or
b₆) reaction products of (per)fluoroalkylalkylene oxides and primary and/or secondary amines or polyamines or aminoalkylalkoxysilanes or isocyanatoalkylalkoxysilanes
or
b₇) reaction products of polyisocyanates and (per)fluoroalkylalkylene alcohols and optionally aminoalkylalkoxysilanes or epoxyalkoxysilanes or (per)fluoroalkylalkylenamines and optionally aminoalkylalkoxysilanes or epoxyalkoxysilanes or (per)fluoroalkylalkylene oxides or (per)fluoroalkylalkylenecarboxylic acids
or
b₈) reaction products of (per)fluoroalkylalkylene alcohols or (per)fluoroalkylalkylenamines and isocyanatoalkylalkoxysilanes or epoxyalkoxysilanes
or
b₉) reactive polyhedral oligomeric polysilasesquioxanes (POSS) of the general formula
(RₐX_{b}SiO_{1.5})ₘ
where a = 0 or 1, b = 0 or 1, a + b = 1, m = 4, 6, 8, 10, 12 and R, X = any desired inorganic and/or organic and optionially polymeric radical having 1 to 250 C atoms and 0 to 50 N and/or 0 to 50 O and/or 10 to 100 F and/or 0 to 50 Si and/or 0 to 50 S atoms
or a suitable combination thereof,
c) 0 to 100 parts by weight of a curing component (C) capable of polyaddition and/or polycondensation and having a molecular weight of 100 to 10,000 dalton, containing in each case one or more reactive aliphatic and/or aromatic primary and/or secondary (blocked) amino, hydroxyl, mercapto, (blocked) isocyanate or aziridine group(s) and/or water, and
d) 0 to 300 parts by weight of a formulation component (D), it being possible for the component (A) to contain the component (B) optionally in polymer-bound form and to have a (polymer-)bound fluorine content of 0.1 to 75% by weight.

2. Reactive resin systems according to Claim 1, **characterized in that** the silane-terminated resin a₁) is a solvent-free or solvent-containing and/or hybridized system.

3. Reactive resin systems according to Claim 1, **characterized in that** the silane-terminated resin a₁) comprises silane-terminated polyurethanes and/or silane-terminated polyethers and/or other silane-terminated oligomers and/or polymers and/or hybrid polymers having terminal and/or lateral alkoxysilane groups.

4. Reactive systems according to Claim 1, **characterized in that** the polyol and/or polyamine mixture a₂) is a solvent-free or solvent-containing and/or hydrophilized and/or aqueous system.

5. Reactive systems according to Claim 1, **characterized in that** the epoxy resin a₃) is a solvent-free or solvent-containing and/or hydrophilized and/or aqueous system.

6. Reactive systems according to Claim 1, **characterized in that** the (meth)acrylate resin a₄) is a solvent-free or solvent-containing and/or aqueous system.

7. Reactive systems according to Claim 1, **characterized in that** the polymer a₅) is a solvent-free or solvent-containing and/or aqueous system.

8. Reactive resin systems according to any of Claims 1 to 7, **characterized in that** the components (A) and (B) comprise the structural elements
-(CF₂CF₂)ₙ- where n ≥ 3
and/or
-(CF₂CFRO)ₙ- where n ≥ 3 and R = F, CF₃
arranged in the main chain and/or side chain.

9. Reactive resin systems according to any of Claims 1 to 8, **characterized in that** the component (C) comprises aliphatic and/or aromatic polyamines, polyamidoamines, polyoxyalkylenamines, low molecular weight polyols, high molecular weight (polymeric) polyols, (water-emulsifiable) aliphatic and/or aromatic polyisocyanates, (water-emulsifiable) aliphatic and/or aromatic polyurethane prepolymers having free isocyanate groups or free hydroxyl groups or free amino groups, polyaziridines or atmospheric humidity.

10. Reactive systems according to any of Claims 1 to 9, **characterized in that** the components (B) and (C) comprise compounds having one or more primary or secondary amino and/or hydroxyl group(s) in the form of latent curing agents or reactive diluents based on aldimines and/or ketimines and/or enamines and/or oxazolidines and/or polyaspartic acid esters, latent curing agents free of cleavage products and based on azetidines and/or diazepines or suitable combinations thereof.

11. Reactive resin systems according to any of Claims 1 to 10, **characterized in that** the component (D) comprises inorganic and/or organic fillers, light fillers, pigments and carrier materials, inorganic and/or organic nanomaterials, inorganic and/or organic fibres, further polymers and/or redispersible polymer powders of all types, antifoams, deaerators, lubricant and levelling additives, substrate wetting additives, wetting and dispersing additives, water repellents, rheology additives, coalescence auxiliaries, dulling agents, adhesion promoters, antifreezes, antioxidants, UV stabilizers, bactericides, fungicides, water, solvents and catalysts of all types.

12. Reactive resin systems according to any of Claims 1 to 11, **characterized in that** the components (B) and/or (C) and/or (D) are present in coated and/or microencapsulated and/or carrier-fixed and/or hydrophilized and/or solvent-containing form.

13. Reactive resin systems according to any of Claims 1 to 12, **characterized in that** the equivalent ratio of the reactive groups in the components (A), (B) and optionally (C) in the case of curing without water (atmospheric humidity) is set at 0.1 to 10, preferably 0.5 to 5.

14. Reactive resin systems according to any of Claims 1 to 13, **characterized in that** the polymer obtained after curing and comprising the components (A), (B) and optionally (C), has an average molecular weight (number average) of 50,000 to 5,000,000 dalton.

15. Process for the preparation of the reactive resin systems according to Claims 1 to 14, **characterized in that**
a₁₎ in the case of three-component application, the components (A), (B) and (C) capable of polyaddition and/or polycondensation are mixed in any desired manner and reacted, it being possible, if appropriate, for a formulation component (D) to be present,
or
a₂₎ in the case of two-component application, preproduced mixtures of the components (A) and (B) or (B) and (C) capable of polyaddition and/or polycondensation are mixed with the components (C) or (A) capable of polyaddition and/or polycondensation in any desired manner or only the components (A) and (B) are mixed in any desired manner and reacted, it being possible, if appropriate, for a formulation component (D) to be present,
or
a₃₎ in the case of one-component application, preproduced mixtures of the components (A) and (B) capable of polyaddition and/or polycondensation are reacted with the component (C) consisting of water (atmospheric humidity), it being possible, if appropriate, for a formulation component (D) to be present,
and finally
b) the mixtures from the stages a₁), a₂) or a₃) are applied in any desired manner to/in the respective substrate.

16. Process according to Claim 15, **characterized in that** the component (B) is first prepared before the stages a₁) or a₂) or a₃) and the formulation component (D) or the individual constituents thereof is or are mixed, before, during or after the reaction according to the stages a₁), a₂) or a₃), with the components (A), (B) or (C) or the preproduced mixtures of the components (A) and (B) or (B) and (C).

17. Process according to Claim 15, **characterized in that** the components (B) and/or (C) and/or (D) in latently reactive form are mixed with the other components and activated only on application.

18. Process according to Claims 15 to 17, **characterized in that** the reaction stages a₁), a₂), and a₃) and d) are carried out at a temperature of 0 to 150°C.

19. Use of the reactive resin systems according to Claims 1 to 14 in the building or industrial sector for permanent oil-, water- and dirt-repellent surface treatment or modification of mineral and nonmineral substrates, such as
• inorganic surfaces,
such as, for example, porous, absorptive, rough and polished building materials and structures and enamel, fillers and pigments, glass, ceramic, metals and metal alloys,
• organic surfaces,
such as, for example, woven fabrics and textiles, wood and wood-based materials, wood veneer, glass fibre-reinforced plastics (GFRP), plastics, leather, natural fibres, polar organic polymers of all types, composite materials.

20. Use of the reactive resin systems according to Claims 1 to 14 for permanent oil-, water- and dirt-repellent surface treatment or modification in the building sector, such as, for example
• antigraffiti / antisoiling coatings
• easy-to-clean coatings
• further coatings of all types (such as, for example, balcony coatings, roof (tile) coatings, stoving enamels, paints and finishes, masonry paints, floor coatings, industrial floors having low, medium and high load capacities, parking floor coatings, sport floors, powder coatings)
• seals
• precast concrete parts
• moulded concrete parts
• tiles and joints
• adhesives and sealants
• noise control walls
• corrosion protection
• plasters and decorative plasters
• composite heat insulation systems and heat insulation systems.

21. Use of the reactive resin systems according to Claims 1 to 14 for permanent oil-, water- and dirt-repellent surface treatment or modification in the nonbuilding and industrial sector, such as, for example,
• automotive industry
• coil coatings
• stoving enamels
• woven fabric and textile coating
• glass facades and glass surfaces
• ceramic and sanitaryware
• leather finishing
• surface-modified fillers and pigments
• paper coating
• rotor blades of wind power stations
• marine paints.

22. Use of the reactive resin systems according to Claims 1 to 14 in the building or industrial sector for mass hydrophobization/oleophobization of concrete, such as, for example,
• precast concrete parts
• moulded concrete parts
• in-situ concrete
• air-paste concrete
• ready-mix concrete.

## Revendications

1. Systèmes de résine réactive modifiés au fluor, à propriétés de surface améliorées, comprenant
a) 100 à 300 parties en poids d'un composant liant (A) apte à une polyaddition et/ou polycondensation, comprenant
a₁) une résine à terminaison silane ayant une masse moléculaire de 1 000 à 250 000 Dalton et 0,1 à 50 % en poids de groupes alcoxysilane libres ayant un schéma de substitution quelconque par rapport à la masse totale de résine
ou
a₂) un mélange de polyol et/ou polyamine à base de composés (polymères) de faible masse moléculaire et/ou de masse moléculaire élevée ayant une masse moléculaire de 60 à 10 000 Dalton et 1 à 50 % en poids de groupes hydroxyle libres et/ou 1 à 50 % en poids de groupes amine libres par rapport à la masse totale de résine
ou
a₃) une résine époxyde ayant une masse moléculaire de 100 à 10 000 Dalton et 0,1 à 50 % en poids de groupes époxyde libres par rapport à la masse totale de résine
ou
a₄) une résine (méth)acrylate ayant une masse moléculaire de 2 500 à 250 000 Dalton et 0,1 à 25 % en poids de groupes hydroxyle libres par rapport à la masse totale de résine
ou
a₅) un autre polymère à base de monomères polymérisables par voie anionique, cationique ou radicalaire avec 0,1 à 25 % en poids de groupes hydroxyle libres par rapport à la masse totale de résine
ou
une de leurs combinaisons,
le composant liant (A) présentant à chaque fois une teneur en solides de 5 à 95 % en poids du polymère,
b) 5 à 100 parties en poids d'un composant de fonctionnalisation (B) apte à une polyaddition et/ou polycondensation, ayant une masse molaire de 100 à 10 000 Dalton et une teneur en fluor relié par polymérisation de 10 à 90 % en poids, contenant à chaque fois un ou plusieurs groupes amino (bloqué), hydroxyle, mercapto, isocyanate (bloqué), alcoxysilane, époxyde, aziridine ou (méth)acrylate réactifs aliphatiques et/ou aromatiques, primaires et/ou secondaires, comprenant
b₁) des (per)fluoroalkylalkylène-amines ou des (per)fluoroalkylalkylène-alcools ou des (per)fluoroalkylalkylène-mercaptans ou des (per)fluoroalkylalkylène-isocyanates ou des (per)fluoroalkylalkylène-oxydes ou des (per)fluoroalkylalkylène-silanes ou des (per)fluoroalkylalkylène-aziridines ou des (per)fluoro(méth)acrylates d'alkyle ou des (méth)acrylates de (per)fluoroalkyle ou des (per)fluoro(méth)acrylates de (per)fluoroalkyle
ou
b₂) des produits de réaction de (per)fluoroalkylalkylène-amines ou de (per)fluoroalkylalkylène-alcools, de diisocyanates et de diéthanolamine, de préférence de perfluoroalkylalkylène-alcools à groupes méthylène terminaux (espaceurs hydrocarbonés) de formule générale
CF₃-(CF₂)ₓ-(CH₂)_{y}-OH
avec x = 3 à 20 et y = 1 à 6
ou d'alcools oligomères d'oxyde d' hexafluoropropène (HFPO) de formule générale
CF₃CF₂CF₂O-(CF(CF₃)CF₂O)_{z}-CF(CF₃)CH₂-OH
avec z = 1 à 10
ou leurs mélanges,
ou
b₃) des produits de réaction de (per)fluoroalkylalcènes et de diéthanolamine ou d'alcoxysilanes ou d'autres composés contenant un groupe amino et un ou plusieurs groupes hydroxyle, de préférence de (per)fluoroalkylalcènes à groupes vinyle terminaux (espaceurs hydrocarbonés) de formule générale
CF₃-(CF₂)ₓ-CH=CH₂,
avec x = 3 à 20
ou leurs mélanges,
ou
b₄) des produits de réaction de (per)fluoro(méth)acrylates d' alkyle ou de (méth)acrylates de (per)fluoroalkyle ou de (per)fluoro(méth)acrylates de (per)fluoroalkyle et de diéthanolamine ou d'autres composés contenant un groupe amino et un ou plusieurs groupes hydroxyle
ou
b₅) des produits de réaction de (per)fluoroalkylalkylène-oxydes et de N-méthyléthanolamine ou de diéthanolamine ou d'autres composés contenant un groupe amino et un ou plusieurs groupes hydroxyle
ou
b₆) des produits de réaction de (per)fluoroalkylalkylène-oxydes et d'amines ou polyamines primaires et/ou secondaires ou d'aminoalkylalcoxysilanes ou d'isocyanatoalkylalcoxysilanes
ou
b₇) des produits de réaction de polyisocyanates et de (per)fluoroalkylalkylène-alcools et éventuellement d'aminoalkylalcoxysilanes ou d'époxyalcoxysilanes ou de (per)fluoroalkylalkylène-amines et éventuellement d'aminoalkylalcoxysilanes ou d'époxyalcoxysilanes ou de (per)fluoroalkylalkylène-oxydes ou d'acides (per)fluoroalkylalkylène-carboxyliques
ou
b₈) des produits de réaction de (per)fluoroalkylalkylène-alcools ou de (per)fluoroalkylalkylène-amines et d'isocyanatoalkylalcoxysilanes ou d'époxyalcoxysilanes
ou
b₉) des polysilasesquioxanes (POSS) oligomères polyédriques réactifs de formule générale
(RₐX_{b}SiO_{1,5})ₘ
avec a = 0 ou 1, b = 0 ou 1, a + b = 1, m = 4, 6, 8, 10, 12 et R, X = un radical inorganique et/ou organique et éventuellement polymère quelconque contenant 1 à 250 atomes C et 0 à 50 atomes N et/ou 0 à 50 atomes O et/ou 10 à 100 atomes F et/ou 0 à 50 atomes Si et/ou 0 à 50 atomes S
ou une de leurs combinaisons appropriées,
c) 0 à 100 parties en poids d'un composant agent de durcissement (C) apte à une polyaddition et/ou polycondensation, ayant une masse moléculaire de 100 à 10 000 Dalton, contenant à chaque fois un ou plusieurs groupes amino (bloqué), hydroxyle, mercapto, isocyanate (bloqué) ou aziridine réactifs aliphatiques et/ou aromatiques, primaires et/ou secondaires, et/ou de l'eau, ainsi que
d) 0 à 300 parties en poids d'un composant de formulation (D), le composant (A) contenant éventuellement le composant (B) sous forme reliée par polymérisation et pouvant présenter une teneur en fluor relié (par polymérisation) de 0,1 à 75 % en poids.

2. Systèmes de résine réactive selon la revendication 1, **caractérisés en ce que** la résine à terminaison silane a₁) se rapporte à un système sans solvant ou contenant un solvant et/ou hybridé.

3. Systèmes de résine réactive selon la revendication 1, **caractérisés en ce que** la résine à terminaison silane a₁) se rapporte à des polyuréthanes à terminaison silane et/ou des polyéthers à terminaison silane et/ou d'autres oligomères et/ou polymères et/ou polymères hybrides à terminaison silane contenant des groupes alcoxysilane terminaux et/ou latéraux.

4. Systèmes réactifs selon la revendication 1, **caractérisés en ce que** le mélange de polyol et/ou de polyamine a₂) se rapporte à un système sans solvant ou contenant un solvant et/ou hydrophilisé et/ou aqueux.

5. Systèmes réactifs selon la revendication 1, **caractérisés en ce que** la résine époxyde a₃) se rapporte à un système sans solvant ou contenant un solvant et/ou hydrophilisé et/ou aqueux.

6. Systèmes réactifs selon la revendication 1, **caractérisés en ce que** la résine (méth)acrylate a₄) se rapporte à un système sans solvant ou contenant un solvant et/ou aqueux.

7. Systèmes réactifs selon la revendication 1, **caractérisés en ce que** le polymère a₅) se rapporte à un système sans solvant ou contenant un solvant et/ou aqueux.

8. Systèmes de résine réactive selon l'une quelconque des revendications 1 à 7, **caractérisés en ce que** les composants (A) et (B) contiennent les éléments structuraux disposés dans la chaîne principale et/ou dans la chaîne latérale
-(CF₂CF₂)ₙ- avec n ≥ 3
et/ou
-(CF₂CFRO)ₙ- avec n ≥ 3 et R = F, CF₃.

9. Systèmes de résine réactive selon l'une quelconque des revendications 1 à 8, **caractérisés en ce que** le composant (C) comprend des polyamines aliphatiques et/ou aromatiques, des polyamidoamines, des polyoxyalkylène-amines, des polyols de faible poids moléculaire, des polyols (polymères) de poids moléculaire élevé, des polyisocyanates aliphatiques et/ou aromatiques (émulsifiables dans de l'eau), des prépolymères de polyuréthane aliphatiques et/ou aromatiques (émulsifiables dans de l'eau) contenant des groupes isocyanate libres ou des groupes hydroxyle libres ou des groupes amino libres, des polyaziridines ou de l'humidité de l'air.

10. Systèmes réactifs selon l'une quelconque des revendications 1 à 9, **caractérisés en ce que** les composants (B) et (C) comprennent des composés contenant un ou plusieurs groupes amino et/ou hydroxyle primaires ou secondaires sous la forme d'agents de durcissement latents ou de diluants réactifs à base d'aldimines et/ou de cétimines et/ou d'énamines et/ou d'oxazolidines et/ou d'esters de l'acide polyasparaginique, d'agents de durcissement latents sans produits de clivage à base d'azétidines et/ou de diazépines ou leurs combinaisons appropriées.

11. Systèmes de résine réactifs selon l'une quelconque des revendications 1 à 10, **caractérisés en ce que** le composant (D) comprend des charges inorganiques et/ou organiques, des charges légères, des pigments et des matériaux supports, des nanomatériaux inorganiques et/ou organiques, des fibres inorganiques et/ou organiques, des polymères supplémentaires et/ou des poudres polymères redispersibles de tout type, des agents anti-mousses, des exhausteurs, des additifs de lubrification et d'écoulement, des additifs de mouillage du substrat, des additifs de mouillage et de dispersion, des agents d'hydrophobation, des additifs de rhéologie, des adjuvants de coalescence, des agents matifiants, des promoteurs d'adhésion, des agents antigel, des antioxydants, des stabilisateurs UV, des bactéricides, des fongicides, de l'eau, des solvants et des catalyseurs de tout type.

12. Systèmes de résine réactive selon l'une quelconque des revendications 1 à 11, **caractérisés en ce que** les composants (B) et/ou (C) et/ou (D) se présentent sous forme enduite et/ou micro-encapsulée et/ou fixée sur un support et/ou hydrophilisée et/ou contenant un solvant.

13. Systèmes de résine réactive selon l'une quelconque des revendications 1 à 12, **caractérisés en ce que** le rapport équivalent entre les groupes réactifs dans les composants (A), (B) et éventuellement (C) dans le cas d'un durcissement sans eau (humidité de l'air) est ajusté de 0,1 à 10, de préférence de 0,5 à 5.

14. Systèmes de résine réactive selon l'une quelconque des revendications 1 à 13, **caractérisés en ce que** le polymère obtenu après le durcissement, contenant les composants (A), (B) et éventuellement (C), présente une masse moléculaire moyenne (moyenne en nombre) de 50 000 à 5 000 000 Dalton.

15. Procédé de fabrication des systèmes de résine réactive selon les revendications 1 à 14, **caractérisé en ce que**
a₁) dans le cas d'une application à trois composants, les composants (A), (B) et (C) aptes à la polyaddition et/ou polycondensation sont mélangés d'une manière quelconque et mis en réaction, un composant de formulation (D) pouvant éventuellement être présent
ou
a₂) dans le cas d'une application à deux composants, des mélanges préfabriqués des composants (A) et (B) ou (B) et (C) aptes à la polyaddition et/ou polycondensation sont mélangés d'une manière quelconque avec le composant (C) ou (A) apte à la polyaddition et/ou polycondensation ou seuls les composants (A) et (B) sont mélangés d'une manière quelconque et mis en réaction, un composant de formulation (D) pouvant éventuellement être présent
ou
a₃) dans le cas d'une application à un composant, des mélanges préfabriqués des composants (A) et (B) aptes à la polyaddition et/ou polycondensation sont mis en réaction avec le composant (C) constitué d'eau (humidité de l'air), un composant de formulation (D) pouvant éventuellement être présent,
puis
b) le mélange de l'étape a₁), a₂) ou a₃) est appliqué d'une manière quelconque sur/dans le substrat correspondant.

16. Procédé selon la revendication 15, **caractérisé en ce que** le composant (B) est fabriqué avant l'étape a₁), a₂) ou a₃), et le composant de formulation (D) ou ses constituants individuels sont mélangés avec les composants (A), (B) ou (C) ou avec les mélanges préfabriqués des composants (A) et (B) ou (B) et (C) avant, pendant ou après la réaction selon l'étape a₁), a₂) ou a₃).

17. Procédé selon la revendication 15, **caractérisé en ce que** les composants (B) et/ou (C) et/ou (D) sont mélangés avec les autres composants sous forme réactive latente et ne sont activés que lors de l'application.

18. Procédé selon les revendications 15 à 17, **caractérisé en ce que** les étapes de réaction a₁), a₂) et a₃) sont réalisées à une température de 0 à 150 °C.

19. Utilisation des systèmes de résine réactive selon les revendications 1 à 14 dans le domaine de la construction ou de l'industrie pour le traitement ou la modification permanente de surfaces de substrats minéraux et non minéraux contre l'huile, l'eau et les salissures, telles que
- des surfaces inorganiques,
telles que p. ex. des matières et des matériaux de construction poreux, aspirants, bruts et polis et des émaux, des charges et des pigments, du verre, de la céramique, des métaux et des alliages de métaux,
- des surfaces organiques,
telles que p. ex. des tissus et des textiles, du bois et des matériaux à base de bois, des feuilles de placage en bois, des plastiques renforcés par des fibres de verre (GFK), des plastiques, du cuir, des fibres naturelles, des polymères organiques polaires de tout type, des matériaux composites.

20. Utilisation des systèmes de résine réactive selon les revendications 1 à 14 pour le traitement ou la modification permanente de surfaces contre l'huile, l'eau et les salissures dans le domaine de la construction, tel que
- des revêtements anti-graffiti/anti-salissures
- des revêtements faciles à nettoyer
- d'autres revêtements de tout type (tels que p. ex. des revêtements de balcons, des revêtements de toits (tuiles), des vernis au four, des peintures et des
laques, des peintures de façades, des revêtements de sol, des planchers industriels faiblement, moyennement et hautement résistants, des revêtements d'étages de parking, des planchers de sport, des revêtements en poudre)
- des joints
- des éléments préfabriqués en béton
- des pièces moulées en béton
- des carreaux et des jointures
- des colles et des agents d'étanchéité
- des murs anti-bruits
- des agents anticorrosion
- des enduits et des enduits décoratifs
- des systèmes composites isolants thermiques (WDVS) et des systèmes isolants thermiques (WDS).

21. Utilisation des systèmes de résine réactive selon les revendications 1 à 14 pour le traitement ou la modification permanente de surfaces contre l'huile, l'eau et les salissures dans le domaine de la non-construction et de l'industrie, tel que p. ex.
- l'industrie automobile
- le prélaquage en continu
- les vernis au four
- les revêtements de tissus et textiles
- les façades en verre et les surfaces en verre
- la céramique et la céramique sanitaire
- la finition du cuir
- les charges et pigments à surface modifiée
- le revêtement du papier
- les lames de rotor d'éoliennes
- les peintures pour navires.

22. Utilisation des systèmes de résine réactive selon les revendications 1 à 14 dans le domaine de la construction ou de l'industrie pour l'hydrophobation/oléophobation en masse de béton, tel que p. ex.
- des éléments préfabriqués en béton
- des pièces moulées en béton
- du béton coulé sur place
- du béton pulvérisé
- du béton transporté.
